# EUROPEAN PATENT APPLICATION

(11) **EP 4 841 918 A1**
(43) Date of publication of application: **18.11.2026**
(21) Application number: 24921540.1
(22) Date of filing: 22.10.2024
(51) Int. Cl.: H04L 1/1607

(54) **COMMUNICATION METHOD AND APPARATUS**

(30) Priority: 01.02.2024 CN 202410149579
(71) Applicant: Huawei Technologies Co., Ltd., Shenzhen, Guangdong 518129 (CN)
(72) Inventor: ZHANG, Yanqing, Shenzhen, Guangdong 518129 (CN); XU, Haibo, Shenzhen, Guangdong 518129 (CN)
(74) Representative: Huawei European IPR
(86) International application number: PCT/CN2024/126493
(87) International publication number: WO 2025/161516

(57) **Abstract**

This application relates to a field of communication technologies and provides a communication method and apparatus. The method includes: determining a first overlapping time period when a first time period overlaps with a first measurement time period, and sending first hybrid automatic repeat request (HARQ) feedback or monitoring first control information in the first overlapping time period, where the first overlapping time period is a time period in which the first time period overlaps with the first measurement time period. The first time period is used to transmit the first HARQ feedback, and the first HARQ feedback is determined based on a decoding result of first data. Alternatively, the first time period is used to monitor the first control information, and the first control information indicates to retransmit first data. The first measurement time period is determined based on a first configuration, the first configuration is a configuration for sending a first reference signal by a first cell, and a measurement result of the first reference signal indicates signal quality of the first cell. The first data is data sent or received by using a shared channel (SCH) before a start moment of the first time period.

## Description

This application claims priority to Chinese Patent Application No. 202410149579.1, filed with the China National Intellectual Property Administration on February 1, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a terminal device may measure a reference signal of a neighboring cell in a specific time period, for example, a measurement gap (measurement gap, MG), to obtain a measurement result of the reference signal, and then perform cell handover based on the measurement result of the reference signal. In addition, when performing reference signal measurement, the terminal device does not perform data transmission with a network device corresponding to a current cell. This increases data transmission delay and affects service transmission performance.

### SUMMARY

To resolve the foregoing technical problem, this application provides a communication method and apparatus, to mitigate impact of reference signal measurement on data transmission, and improve service transmission performance. To achieve the foregoing objective, this application uses the following technical solutions.

According to a first aspect, a communication method is provided. The method may be performed by a terminal device, may be performed by a component (for example, a processor, a chip, or a chip system) in the terminal device, or may be performed by a logical module or software that can implement all or some functions of the terminal device. The following uses an example in which the method is performed by the terminal device for description. The method includes:
determining a first overlapping time period when a first time period overlaps with a first measurement time period, and sending first hybrid automatic repeat request HARQ feedback or monitoring first control information in the first overlapping time period, where the first overlapping time period is a time period in which the first time period overlaps with the first measurement time period.

The first time period is used to transmit the first HARQ feedback, and the first HARQ feedback is determined based on a decoding result of first data. Alternatively, the first time period is used to monitor the first control information, and the first control information indicates to retransmit first data.

The first measurement time period is determined based on a first configuration, the first configuration is a configuration for sending a first reference signal by a first cell, and a measurement result of the first reference signal indicates signal quality of the first cell. For example, the first cell includes a candidate cell, or the first cell further includes a serving cell. The first data is data sent or received by using a shared channel (SCH) before a start moment of the first time period.

The first overlapping time period may include the following four cases:
Case a: The start moment of the first time period is later than a start moment of the first measurement time period, and an end moment of the first time period is later than or equal to an end moment of the first measurement time period. In this case, a start moment of the first overlapping time period is the same as the start moment of the first time period, and an end moment of the first overlapping time period is the same as the end moment of the first measurement time period.
Case b: The start moment of the first time period is later than a start moment of the first measurement time period, and an end moment of the first time period is earlier than an end moment of the first measurement time period. In this case, a start moment of the first overlapping time period is the same as the start moment of the first time period, and an end moment of the first overlapping time period is the same as the end moment of the first time period, that is, the first overlapping time period is the first time period.
Case c: The start moment of the first time period is earlier than or equal to a start moment of the first measurement time period, and an end moment of the first time period is earlier than an end moment of the first measurement time period. In this case, a start moment of the first overlapping time period is the same as the start moment of the first measurement time period, and an end moment of the first overlapping time period is the same as the end moment of the first time period.
Case d: The start moment of the first time period is earlier than or equal to a start moment of the first measurement time period, and an end moment of the first time period is later than or equal to an end moment of the first measurement time period. In this case, a start moment of the first overlapping time period is the same as the start moment of the first measurement time period, and an end moment of the first overlapping time period is the same as the end moment of the first measurement time period, that is, the first overlapping time period may alternatively include an entire time period of the first measurement time period.

In other words, even if the first time period overlaps with the first measurement time period, the terminal device still performs a normal operation in the first overlapping time period.

For example, when the first time period is used to transmit the first HARQ feedback, the terminal device sends the first HARQ feedback in the first overlapping time period, instead of performing reference signal measurement. Compared with a case in which the terminal device measures the first reference signal in the first overlapping time period and then sends the first HARQ feedback after the first overlapping time period, in this application, the terminal device can send the first HARQ feedback as early as possible, so that a network device side performs data scheduling in a timely manner based on the first HARQ feedback. This reduces a service data transmission delay, and mitigates impact of reference signal measurement on data transmission to some extent.

For another example, when the first time period is used to monitor the first control information, the terminal device monitors the first control information in the first overlapping time period, instead of performing reference signal measurement. Compared with a case in which the terminal device measures the first reference signal in the first overlapping time period and then monitors the first control information after the first overlapping time period, in this application, the terminal device can receive the first control information as early as possible. This reduces a service data transmission delay, and mitigates impact of reference signal measurement on data transmission to some extent.

In a possible design, the method further includes: not measuring the first reference signal in a second time period. The second time period is the first measurement time period or the first overlapping time period, to mitigate impact of reference signal measurement on data transmission.

In a possible design, the method further includes: not measuring the first reference signal in a second time period. When an end moment of the first overlapping time period is earlier than an end moment of the first measurement time period, a start moment of the second time period is a start moment of the first measurement time period, and/or an end moment of the second time period is the end moment of the first overlapping time period. Alternatively, when an end moment of the first overlapping time period is equal to an end moment of the first measurement time period, a start moment of the second time period is a start moment of the first overlapping time period, and/or an end moment of the second time period is the end moment of the first measurement time period. This mitigates impact of reference signal measurement on data transmission.

In a possible design, the method further includes: measuring the first reference signal in a third time period, where a start moment of the third time period is a first moment. The first moment is equal to or later than an end moment of the first time period, and an end moment of the third time period is the same as the end moment of the first measurement time period.

In other words, the third time period is a part of the first measurement time period, for example, is located at an end part of the first measurement time period, and does not overlap with the first time period. In this way, the terminal device measures the first reference signal in a timely manner in the third time period, helping improve reference signal measurement performance and resource utilization.

In a possible design, the method further includes: measuring the first reference signal in a third time period, where a start moment of the third time period is a first moment. The first moment is the start moment of the first measurement time period, and an end moment of the third time period is the same as the start moment of the first time period.

In other words, the third time period is a part of the first measurement time period, for example, is located at a start part of the first measurement time period, and does not overlap with the first time period. In this way, the terminal device measures the first reference signal in a timely manner in the third time period, helping improve reference signal measurement performance and resource utilization.

In a possible design, the method further includes: receiving first information, where sending the first HARQ feedback in the first overlapping time period includes: sending the first HARQ feedback in the first overlapping time period based on the first information. For example, the first information indicates the terminal device to send the first HARQ feedback in the first overlapping time period, to simplify processing complexity on the terminal device side.

In a possible design, the method further includes: receiving first information, where monitoring the first control information in the first overlapping time period includes: monitoring the first control information in the first overlapping time period based on the first information. For example, the first information indicates the terminal device to monitor the first control information in the first overlapping time period, to simplify processing complexity on the terminal device side.

In a possible design, the first time period is associated with a first HARQ when the first time period is used to monitor the first control information; and monitoring the first control information in the first overlapping time period based on the first information includes: determining a first priority and/or a second priority based on the first information, where the first priority indicates a priority of the first HARQ, and the second priority indicates a priority of the first configuration; and monitoring the first control information in the first overlapping time period when the first priority is higher than the second priority.

In other words, when the first priority is higher than the second priority, the terminal device monitors the first control information in the first overlapping time period, prioritizing transmission performance of service data.

In a possible design, sending the first HARQ feedback in the first overlapping time period based on the first information includes: determining a first priority and/or a second priority based on the first information, where the first priority is a priority of the first HARQ, and the second priority is a priority of the first configuration; and sending the first HARQ feedback in the first overlapping time period when the first priority is higher than the second priority.

In other words, when the first priority is higher than the second priority, the terminal device sends the first HARQ feedback in the first overlapping time period, prioritizing transmission performance of service data.

In a possible design, the first information is second control information, the second control information is used to schedule the first data, and the second control information further indicates the first priority.

In a possible design, the first information indicates the first priority.

In a possible design, the first information further indicates the SCH and a periodicity of the SCH. For example, the first information indicates a time-frequency resource of the SCH.

In a possible design, the first priority further indicates a priority of a discontinuous reception (DRX) configuration.

In a possible design, the first information indicates the second priority.

In a possible design, the second priority is lower than or equal to a first threshold.

In a possible design, the first information is discontinuous reception DRX configuration information, and the DRX configuration information is used to configure a retransmission timer RetransmissionTimer. The method further includes: determining the first time period based on the retransmission timer, where the retransmission timer is associated with the first HARQ.

In other words, when the first time period and the retransmission timer are associated with a same HARQ, namely, the first HARQ, the first time period may be a time period in which the retransmission timer runs.

In a possible design, the DRX configuration information is further used to configure a first timer, and the method further includes: determining a fourth time period based on the first timer; and determining a second overlapping time period when the fourth time period overlaps with a second measurement time period, and monitoring third control information in the second overlapping time period, where the third control information indicates to send or receive data. The second measurement time period is determined based on the first configuration, and the second overlapping time period is a time period in which the fourth time period overlaps with the second measurement time period.

The second overlapping time period may include the following four cases:
Case a: A start moment of the fourth time period is later than a start moment of the second measurement time period, and an end moment of the fourth time period is later than or equal to an end moment of the second measurement time period. In this case, a start moment of the second overlapping time period is the same as the start moment of the fourth time period, and an end moment of the second overlapping time period is the same as the end moment of the second measurement time period.
Case b: A start moment of the fourth time period is later than a start moment of the second measurement time period, and an end moment of the fourth time period is earlier than an end moment of the second measurement time period. In this case, a start moment of the second overlapping time period is the same as the start moment of the fourth time period, and an end moment of the second overlapping time period is the same as the end moment of the fourth time period, that is, the second overlapping time period is the fourth time period.
Case c: A start moment of the fourth time period is earlier than or equal to a start moment of the second measurement time period, and an end moment of the fourth time period is earlier than an end moment of the second measurement time period. In this case, a start moment of the second overlapping time period is the same as the start moment of the second measurement time period, and an end moment of the second overlapping time period is the same as the end moment of the fourth time period.
Case d: A start moment of the fourth time period is earlier than or equal to a start moment of the second measurement time period, and an end moment of the fourth time period is later than or equal to an end moment of the second measurement time period. In this case, a start moment of the second overlapping time period is the same as the start moment of the second measurement time period, and an end moment of the second overlapping time period is the same as an end moment of the second measurement time period, that is, the second overlapping time period may alternatively include an entire time period of the second measurement time period.

In other words, even if the fourth time period overlaps with the second measurement time period, the terminal device still monitors the third control information in the second overlapping time period, instead of performing reference signal measurement. Compared with a case in which the terminal device measures the first reference signal in the second overlapping time period and then monitors the third control information after the second overlapping time period, in this application, the terminal device can receive the third control information as early as possible. This reduces a service data transmission delay, and mitigates impact of reference signal measurement on data transmission to some extent.

In a possible design, the first timer includes an on-duration timer onDurationTimer.

In a possible design, the first timer includes an inactivity timer InactivityTimer.

In a possible design, the method further includes: not measuring the first reference signal in a fifth time period. The fifth time period is the second measurement time period or the second overlapping time period, to mitigate impact of reference signal measurement on data transmission.

In a possible design, the method further includes: not measuring the first reference signal in a fifth time period. When the end moment of the second overlapping time period is earlier than the end moment of the second measurement time period, a start moment of the fifth time period is the start moment of the second measurement time period, and/or an end moment of the fifth time period is the end moment of the second overlapping time period. Alternatively, when the end moment of the second overlapping time period is equal to the end moment of the second measurement time period, a start moment of the fifth time period is the start moment of the second overlapping time period, and/or an end moment of the fifth time period is the end moment of the second measurement time period. This mitigates impact of reference signal measurement on data transmission.

In a possible design, the DRX configuration information further indicates the first priority.

In a possible design, when the first moment is later than the end moment of the first time period, there is a sixth time period between the first moment and the end moment of the first time period.

According to a second aspect, a communication method is provided. The method may be performed by a terminal device, may be performed by a component (for example, a processor, a chip, or a chip system) in the terminal device, or may be performed by a logical module or software that can implement all or some functions of the terminal device. The following uses an example in which the method is performed by the terminal device for description. The method includes:
determining a second overlapping time period when a fourth time period overlaps with a second measurement time period, and monitoring third control information in the second overlapping time period, where the third control information indicates to send or receive data. The fourth time period is used to monitor the third control information, the second measurement time period is determined based on the first configuration, the first configuration is a configuration for sending a first reference signal by a first cell, and a measurement result of the first reference signal indicates signal quality of the first cell. The second overlapping time period is a time period in which the fourth time period overlaps with the second measurement time period.

In other words, even if the fourth time period overlaps with the second measurement time period, the terminal device still monitors the third control information in the second overlapping time period, instead of performing reference signal measurement. Compared with a case in which the terminal device measures the first reference signal in the second overlapping time period and then monitors the third control information after the second overlapping time period, in this application, the terminal device can receive the third control information as early as possible. This reduces a service data transmission delay, and mitigates impact of reference signal measurement on data transmission to some extent.

In a possible design, the fourth time period is determined based on a first timer.

In a possible design, the first timer includes an on-duration timer onDurationTimer.

In a possible design, the first timer includes an inactivity timer InactivityTimer.

In a possible design, the method further includes: not measuring the first reference signal in a fifth time period. The fifth time period is the second measurement time period or the second overlapping time period, to mitigate impact of reference signal measurement on data transmission.

In a possible design, the method further includes: not measuring the first reference signal in a fifth time period. When the end moment of the second overlapping time period is earlier than the end moment of the second measurement time period, a start moment of the fifth time period is the start moment of the second measurement time period, and/or an end moment of the fifth time period is the end moment of the second overlapping time period. Alternatively, when the end moment of the second overlapping time period is equal to the end moment of the second measurement time period, a start moment of the fifth time period is the start moment of the second overlapping time period, and/or an end moment of the fifth time period is the end moment of the second measurement time period. This mitigates impact of reference signal measurement on data transmission.

According to a third aspect, a communication method is provided. The method may be performed by a terminal device, may be performed by a component (for example, a processor, a chip, or a chip system) in the terminal device, or may be performed by a logical module or software that can implement all or some functions of the terminal device. The following uses an example in which the method is performed by the terminal device for description. The method includes:
starting a first measurement time period when a first overlapping time period does not exist, and a start moment of the first measurement time period arrives.

The first overlapping time period is a time period in which the first time period overlaps with the first measurement time period. The first time period is used to transmit first hybrid automatic repeat request (HARQ) feedback, and the first HARQ feedback is determined based on a decoding result of first data. Alternatively, the first time period is used to monitor first control information, and the first control information indicates to retransmit first data. Alternatively, the first time period is used to monitor third control information, and the third control information indicates to send or receive data. For the first time period used to monitor the third control information, refer to the descriptions of the "fourth time period" in the second aspect.

The first measurement time period is determined based on a first configuration, the first configuration is a configuration for sending a first reference signal by a first cell, and a measurement result of the first reference signal indicates signal quality of the first cell. For example, the first cell includes a candidate cell, or the first cell further includes a serving cell. The first data is data sent or received by using a shared channel (SCH) before a start moment of the first time period.

That the first overlapping time period does not exist means that the first time period does not overlap with the first measurement time period.

Starting the first measurement time period may be understood as that the first reference signal is measured in the first measurement time period.

In other words, the terminal device determines, based on whether the first overlapping time period exists, whether to start the first measurement time period, that is, whether to measure the first reference signal in the first measurement time period. When the first overlapping time period does not exist, the terminal device may start the first measurement time period in a timely manner to perform reference signal measurement. In this way, accuracy of reference signal measurement is improved, and a service data transmission delay is not affected.

According to a fourth aspect, a communication method is provided. The method may be performed by a network device, may be performed by a component (for example, a processor, a chip, or a chip system) in the network device, or may be performed by a logical module or software that can implement all or some functions of the network device. The following uses an example in which the method is performed by the network device for description. The method includes:
determining a first overlapping time period when a first time period overlaps with a first measurement time period, and receiving first hybrid automatic repeat request HARQ feedback or sending first control information in the first overlapping time period, where the first overlapping time period is a time period in which the first time period overlaps with the first measurement time period.

The first time period is used to receive the first HARQ feedback, and the first HARQ feedback is determined based on a decoding result of first data. Alternatively, the first time period is used to send the first control information, and the first control information indicates to retransmit first data.

The first measurement time period is determined based on a first configuration, the first configuration is a configuration for sending a first reference signal by a first cell, and a measurement result of the first reference signal indicates signal quality of the first cell. The first data is data sent or received by using a shared channel (SCH) before a start moment of the first time period.

In a possible design, the first time period is associated with a first HARQ when the first time period is used to send the first control information; and sending the first control information in the first overlapping time period includes: when a first priority is higher than a second priority, sending the first control information in the first overlapping time period, where the first priority indicates a priority of the first HARQ, and the second priority indicates a priority of the first configuration.

In a possible design, sending the first HARQ feedback in the first overlapping time period includes: when a first priority is higher than a second priority, sending the first HARQ feedback in the first overlapping time period, where the first priority is a priority of the first HARQ, and the second priority is a priority of the first configuration.

In a possible design, the method further includes: sending first information, where the first information is used to determine the first priority and/or the second priority.

In a possible design, the first information is second control information, the second control information is used to schedule the first data, and the second control information further indicates the first priority.

In a possible design, the first information indicates the first priority.

In a possible design, the first information further indicates the SCH and a periodicity of the SCH.

In a possible design, the first priority further indicates a priority of a discontinuous reception (DRX) configuration.

In a possible design, the first information indicates the second priority.

In a possible design, the second priority is lower than or equal to a first threshold.

In a possible design, the first information is discontinuous reception DRX configuration information, and the DRX configuration information is used to configure a retransmission timer RetransmissionTimer. The method further includes: determining the first time period based on the retransmission timer, where the retransmission timer is associated with the first HARQ.

In a possible design, the DRX configuration information is further used to configure a first timer, and the method further includes: determining a fourth time period based on the first timer; determining a second overlapping time period when the fourth time period overlaps with a second measurement time period, and sending third control information in the second overlapping time period, where the third control information indicates to send or receive data. The second measurement time period is determined based on the first configuration, and the second overlapping time period is a time period in which the fourth time period overlaps with the second measurement time period.

In a possible design, the first timer includes an on-duration timer onDurationTimer.

In a possible design, the first timer includes an inactivity timer InactivityTimer.

In a possible design, the DRX configuration information further indicates the first priority.

For technical effects brought by any design manner in the fourth aspect, refer to the technical effects brought by different design manners in the first aspect. Details are not described herein again.

According to a fifth aspect, a communication method is provided. The method may be performed by a network device, may be performed by a component (for example, a processor, a chip, or a chip system) in the network device, or may be performed by a logical module or software that can implement all or some functions of the network device. The following uses an example in which the method is performed by the network device for description. The method includes:
determining a second overlapping time period when a fourth time period overlaps with a second measurement time period, and sending third control information in the second overlapping time period, where the third control information indicates to send or receive data. The fourth time period is used to send the third control information, the second measurement time period is determined based on the first configuration, the first configuration is a configuration for sending a first reference signal by a first cell, and a measurement result of the first reference signal indicates signal quality of the first cell. The second overlapping time period is a time period in which the fourth time period overlaps with the second measurement time period.

In a possible design, the fourth time period is determined based on a first timer.

In a possible design, the first timer includes an on-duration timer onDurationTimer.

In a possible design, the first timer includes an inactivity timer InactivityTimer.

For technical effects brought by any design manner in the fifth aspect, refer to the technical effects brought by different design manners in the second aspect. Details are not described herein again.

According to a sixth aspect, a communication apparatus is provided, to implement the foregoing methods. The communication apparatus includes corresponding modules, units, or means (means) for implementing the methods. The modules, units, or means may be implemented by hardware, software, or hardware executing corresponding software. The hardware or the software includes one or more modules or units corresponding to a function.

In some possible designs, the communication apparatus may include a processing module and a transceiver module. The processing module may be configured to implement a processing function in any one of the foregoing aspects and any possible implementation thereof. The transceiver module may also be referred to as a transceiver unit, and is configured to implement a sending function and/or a receiving function in any one of the foregoing aspects and any possible implementation thereof. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and any possible implementation thereof.

According to a seventh aspect, a communication apparatus is provided, and is configured to implement the method according to any one of the foregoing aspects or the possible designs of any one of the foregoing aspects.

According to an eighth aspect, a communication apparatus is provided, including a processor. The processor is configured to execute a computer program or instructions, so that the communication apparatus performs the method according to any one of the foregoing aspects or the possible designs of any one of the foregoing aspects. Optionally, the communication apparatus further includes a memory. The memory may be coupled to the processor, or the memory may be independent of the processor. For example, the memory and the processor are two independent modules. The memory may be outside the communication apparatus, or may be inside the communication apparatus.

According to a ninth aspect, a computer-readable storage medium is provided. The computer-readable storage medium stores a computer program or instructions. When the computer program or the instructions are run, the method according to any one of the foregoing aspects or the possible designs of any one of the foregoing aspects is implemented.

According to a tenth aspect, a computer program product including instructions is provided. When the computer program product is run, the method according to any one of the foregoing aspects or the possible designs of any one of the foregoing aspects is implemented.

The communication apparatus provided in any one of the sixth aspect to the tenth aspect may be the terminal device in the first aspect, the second aspect, or the third aspect, or a component included in the terminal device, for example, a chip or a chip system. Alternatively, the communication apparatus may be the network device in the fourth aspect or the fifth aspect, or a component included in the network device, for example, a chip or a chip system. When the apparatus is the chip system, the apparatus may include a chip, or may include a chip and another discrete device.

It may be understood that, when the communication apparatus provided in any one of the sixth aspect to the tenth aspect is the chip, a sending action/function of the communication apparatus may be understood as outputting information, and a receiving action/function of the communication apparatus may be understood as inputting information.

According to an eleventh aspect, a communication apparatus is provided, and is configured to implement the method according to any one of the foregoing aspects or the possible designs of any one of the foregoing aspects. Optionally, the communication apparatus includes a terminal device, a network device, a chip system, or a chip.

For technical effects brought by any design manner in the sixth aspect to the eleventh aspect, refer to the technical effects brought by different design manners in the first aspect, the second aspect, or the third aspect. Details are not described herein again.

### BRIEF DESCRIPTION OF DRAWINGS

FIG. 1 is a diagram of an architecture of a communication system according to an embodiment of this application;
FIG. 2 is a diagram of a data transmission scenario according to an embodiment of this application;
FIG. 3 is a diagram of a configuration of discontinuous reception according to an embodiment of this application;
FIG. 4 is a diagram of another configuration of discontinuous reception according to an embodiment of this application;
FIG. 5 is a diagram of still another configuration of discontinuous reception according to an embodiment of this application;
FIG. 6 is a diagram of still another configuration of discontinuous reception according to an embodiment of this application;
FIG. 7 is a diagram of a scenario of sending hybrid automatic repeat request (HARQ) feedback according to an embodiment of this application;
FIG. 8 is a schematic flowchart of a semi-static configuration according to an embodiment of this application;
FIG. 9 is a schematic flowchart of another semi-static configuration according to an embodiment of this application;
FIG. 10 is a schematic flowchart of a communication method according to an embodiment of this application;
FIG. 11 is a diagram of another scenario of sending hybrid automatic repeat request (HARQ) feedback according to an embodiment of this application;
FIG. 12 is a diagram of still another scenario of sending hybrid automatic repeat request (HARQ) feedback according to an embodiment of this application;
FIG. 13 is a diagram of distribution of time periods according to an embodiment of this application;
FIG. 14 is a schematic flowchart of another communication method according to an embodiment of this application;
FIG. 15 is a schematic flowchart of still another communication method according to an embodiment of this application;
FIG. 16 is a diagram of a scenario of monitoring a control channel according to an embodiment of this application;
FIG. 17 is a schematic flowchart of still another communication method according to an embodiment of this application;
FIG. 18 is a schematic flowchart of still another communication method according to an embodiment of this application;
FIG. 19 is a diagram of another scenario of monitoring a control channel according to an embodiment of this application;
FIG. 20 is a diagram of still another scenario of monitoring a control channel according to an embodiment of this application;
FIG. 21 is a diagram of still another scenario of monitoring a control channel according to an embodiment of this application;
FIG. 22 is a schematic flowchart of still another communication method according to an embodiment of this application;
FIG. 23 is a diagram of a scenario of measuring a reference signal according to an embodiment of this application;
FIG. 24 is a schematic flowchart of still another communication method according to an embodiment of this application;
FIG. 25 is a diagram of a structure of a communication apparatus according to an embodiment of this application;
FIG. 26 is a diagram of a structure of another communication apparatus according to an embodiment of this application; and
FIG. 27 is a diagram of a structure of another communication apparatus according to an embodiment of this application.

### DESCRIPTION OF EMBODIMENTS

The following describes technical solutions of this application with reference to accompanying drawings.

For ease of understanding embodiments of this application, before this application is described, the following descriptions are first provided.
1. In this application, terms "system" and "network" are interchangeable. Various aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In this application, words such as "example" and "for example" mean giving an example, an illustration, or a description. Any embodiment or design scheme described as an "example" in this application should not be explained as being more preferred or having more advantages than another embodiment or design scheme. To be precise, the term "example" is for presenting a concept in a specific manner.

In this application, "of (of)", "relevant (corresponding, relevant)", and "corresponding (corresponding)" may be interchangeably used sometimes. It should be noted that meanings expressed by the terms are consistent when differences between the terms are not emphasized.

In this application, for ease of description, when it comes to numbering, the numbering may be performed consecutively starting from 1, may be performed consecutively starting from 0, or may be performed starting from any parameter. It should be understood that the foregoing descriptions are all settings for ease of describing the technical solutions provided in embodiments of this application, but are not intended to limit the scope of embodiments of this application.

2. In embodiments of this application, "indication" may include a direct indication and an indirect indication, or may include an explicit indication and an implicit indication. Information indicated by information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected according to a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to, one or a combination of at least two of radio resource control signaling, media access control layer signaling, and physical layer signaling. The radio resource control signaling may include RRC (radio resource control) signaling, the media access control layer signaling may include a media access control control element (media access control control element, MAC CE), and the physical layer signaling may include downlink control information (downlink control information, DCI).
3. "Pre-definition" or "pre-configuration" may be implemented by pre-storing, in a device (for example, including a terminal device), corresponding code, a table, or another manner that may indicate related information. A specific implementation of the "pre-definition" or "pre-configuration" is not limited in embodiments of this application. "Storing" may be storing something in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in embodiments of this application.
4. A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in embodiments of this application.
5. In embodiments of this application, descriptions such as "when...", "in a case of...", and "if" all mean that the device (for example, the terminal device) performs corresponding processing in an objective case, and are not limited to time, and the device (for example, the terminal device) is not required to perform a determining action during implementation. This does not mean that there is another limitation.
6. In the descriptions of this application, "/" represents an "or" relationship between associated objects unless otherwise specified. For example, A/B may represent A or B. The term "and/or" in embodiments of this application describes only an association relationship between associated objects and indicates that three relationships may exist. For example, A and/or B may indicate the following three cases: Only A exists, both A and B exist, and only B exists, where A and B may be singular or plural. In addition, in descriptions of embodiments of this application, unless otherwise specified, "a plurality of" means two or more. "At least one of the following items (pieces)" or a similar expression thereof means any combination of these items, including a singular item (piece) or any combination of plural items (pieces). For example, at least one of a, b, or c may represent a, b, c, a and b, a and c, b and c, or a, b, and c, where a, b, and c may be singular or plural.

In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

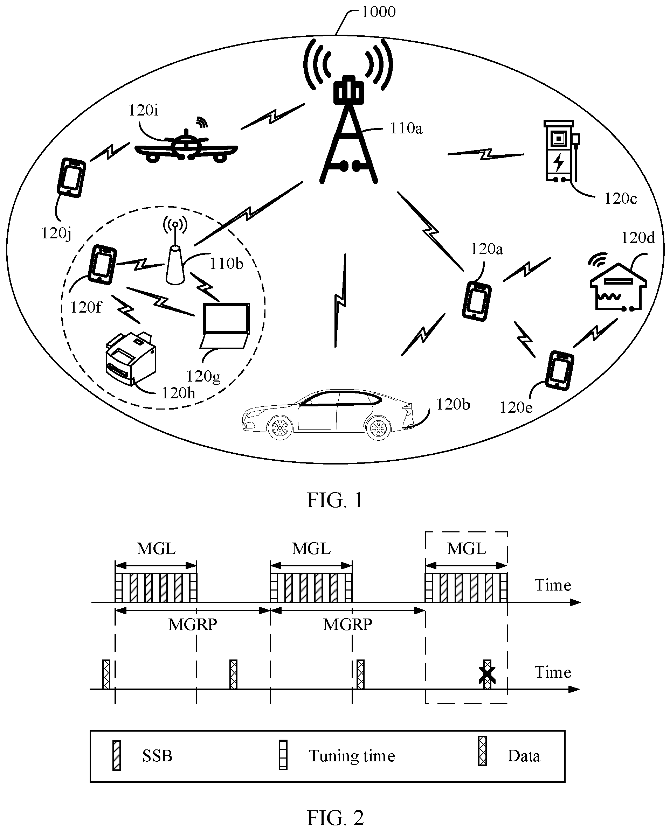

FIG. 1 is a diagram of an architecture of a communication system 1000 to which an embodiment of this application is applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, another network device may be further included in the communication system 1000. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different independent physical devices, or functions of the core network device and logical functions of the network device may be integrated into a same physical device, or a part of functions of the core network device and a part of functions of the network device may be integrated into one physical device. This is not specifically limited in embodiments of this application.

Optionally, the network device is a network side device having a wireless transceiver function. The network device may be an apparatus, in a radio access network (radio access network, RAN), that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. Alternatively, the RAN may be an open radio access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, a wireless fidelity (wireless fidelity, Wi-Fi) system, a long range (long range, LoRa) radio system, or an access node in an internet of vehicles system. Alternatively, the RAN device may be a module or a unit that implements a part of functions of the base station, for example, may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). In different systems, the CU, the DU, or the RU may also have a different name, but a person skilled in the art may understand a meaning thereof. For example, in an ORAN system, the CU may also be referred to as an O-CU (open CU), the DU may also be referred to as an O-DU, and the RU may also be referred to as an O-RU. Any unit among the CU (or the CU-CP or the CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the network device is used as an abbreviation of the radio access network device, and the base station is used as an example of the radio access network device.

Optionally, the terminal device accesses a core network through the network device. The terminal device includes a device that provides a voice and/or data connectivity for a user. Specifically, the terminal device includes a device that provides the voice for the user, includes a device that provides the data connectivity for the user, or includes a device that provides the voice and the data connectivity for the user, for example, may include a handheld device having a wireless connection function, or a processing device connected to a wireless modem. The terminal device may communicate with the core network through the radio access network, exchange a voice or data with the RAN, or exchange a voice and data with the RAN. The terminal device may include user equipment (user equipment, UE), a wireless terminal device, a mobile terminal device, a D2D terminal device, a V2X terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device further includes a limited device, for example, a device with relatively low power consumption, a device with a limited storage capability, or a device with a limited computing power. For example, the terminal device includes an information sensing device such as a barcode, radio frequency identification (radio frequency identification, RFID), a sensor, a global positioning system (global positioning system, GPS), or a laser scanner.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood that any device that can perform data communication with the base station may be considered as the terminal device.

In embodiments of this application, the apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal is a terminal device is used for description.

It should be understood that the network device and the terminal device may be at a fixed location, or may be movable. The network device and the terminal device may be deployed on land, including an indoor or outdoor device or a handheld or vehicle-mounted device; may be deployed on water; or may be deployed on an airplane, a balloon, an artificial satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network through 120i, the terminal device 120i is a network device. However, for the network device 110a, 120i is a terminal device. In other words, 110a and 120i communicate with each other through a radio air interface protocol. Certainly, 110a and 120i may alternatively communicate with each other through an interface protocol between base stations. In this case, for 110a, 120i is also a network device. Therefore, the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between the network device and the terminal device, between the network devices, and between the terminal devices by using a licensed spectrum, an unlicensed spectrum, or both the licensed spectrum and the unlicensed spectrum. Communication may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection with a cell controlled by the network device. The cell establishing the wireless connection to the terminal device is referred to as a serving cell of the terminal device. When the terminal device communicates with the serving cell, the terminal device is further interfered by a signal from a neighboring cell.

Unless otherwise specified, the "network device" in this application may be the network device, may be a component (for example, a processor, a chip, or a chip system) in the network device, or may be a logical module or software that can implement all or some functions of the network device.

Unless otherwise specified, the "terminal device" in this application may be the terminal device, may be a component (for example, a processor, a chip, or a chip system) in the terminal device, or may be a logical module or software that can implement all or some functions of the terminal device.

It should be noted that the solutions in embodiments of this application may alternatively be applied to another communication system, and a corresponding name may alternatively be replaced with a name of a corresponding function in the another communication system.

For ease of understanding embodiments of this application, the following first briefly describes terms in embodiments of this application. It should be understood that these descriptions are merely for ease of understanding embodiments of this application, and should not constitute any limitation on this application.

### 1. Measurement gap (measurement gap, MG)

The terminal device has specific mobility, and may not camp on one cell for a long time. When the terminal device monitors that signal quality of a current cell, for example, one or more of reference signal received power (reference signal received power, RSRP), a received signal strength indicator (received signal strength indicator, RSSI), reference signal received quality (reference signal received quality, RSRQ), or a signal to interference plus noise ratio (signal to interference plus noise ratio, SINR), is lower than a threshold or is lower than a threshold for a period of time, the terminal device reports a measurement result, or reports an A2 event (A2 event), to notify that the signal quality of the current cell is lower than the threshold. When the network device receives the signal, the network device considers performing cell handover (handover, HO) for the terminal device, in other words, handing over the terminal device to a neighboring cell. When a signal frequency of another cell is different from a signal frequency of the current cell, the network device configures, for the terminal device, a measurement gap and another measurement parameter, for example, a measurement frequency of the neighboring cell.

Within duration of the MG, the terminal device measures a frequency of the neighboring cell to which the terminal device is to be handed over, for example, measures a synchronization signal/physical broadcast channel block (synchronization signal/physical broadcast channel, SS/PBCH, SSB for short) of the neighboring cell. Consequently, the terminal device cannot receive or send data within the duration of the MG. An MG configuration may include several parameters, for example, an MG repetition periodicity (MG repetition period, MGRP), indicating a periodicity of the MG. In other words, the MG appears periodically based on the MGRP, or the terminal device enters the MGRP periodically based on the MGRP. For example, a periodicity of the MGRP may be 20 ms, 40 ms, 80 ms, or 160 ms. Optionally, the MG configuration further includes an MG length (MG length, MGL), indicating the duration of the MG. For example, minimum duration of the MG is 1 ms, and maximum duration of the MG is 20 ms. Therefore, when the terminal device is configured to perform frequent inter-frequency measurement, for example, at a short periodicity (for example, 20 ms), the terminal device needs to frequently enter the MG. Consequently, data transmission is affected, and especially for transmission of an XR-type delay-sensitive service, data transmission performance is greatly affected.

It should be understood that, in this application, the measurement gap may have other names, for example, measurement period, measurement interval, and the like. In this application, the measurement gap is used as an example for description, and should not be construed as a limitation on this application.

However, when bandwidth of a receiver of the terminal device is insufficient to cover both a frequency at which a serving cell is located and a frequency at which a to-be-measured neighboring cell is located, the terminal device needs to switch a receive bandwidth to the frequency of the neighboring cell for inter-frequency measurement.

Currently, in an inter-frequency or inter-system scenario, the terminal device usually needs assistance of the MG to perform effective measurement. Inter-frequency or inter-system measurement: If the terminal device does not have a plurality of receivers, or bandwidth of the receiver of the terminal device does not cover a to-be-measured inter-frequency frequency, signal receiving and sending of the serving cell and measurement of the neighboring cell cannot be simultaneously performed. In this case, the serving cell needs to arrange some MGs for the terminal device to perform inter-frequency and inter-system measurement. The measurement gap is a time period during which the terminal device leaves a current frequency to perform measurement on another frequency, and is related, for example, in inter-frequency measurement and inter-system measurement. During the MG, the network device does not schedule uplink transmission and downlink transmission, and the terminal device does not receive or send data.

Specifically, an activation periodicity of the MG may be obtained by using Formula (a): $\begin{matrix}SFN mod T = FLOOR \left(gapOffset/10\right) ; \\ Subframe = gapOffset mod 10 ; \\ T = MGRP / 10 .\end{matrix}$ Formula (a)

SFN represents a system frame number (system frame number), namely, an SFN in which a start moment of the MG is located. mod indicates a modulo operator. FLOOR represents rounding down. Subframe represents a subframe number, namely, a subframe number corresponding to a subframe in which the start moment of the MG is located. gapOffset is an offset of the start moment of the MG, and is usually obtained through configuration through higher layer signaling, for example, RRC signaling.

In this way, the terminal device may determine, based on Formula (a) and configuration parameters (for example, gapOffset and MGRP) provided by the network device, a subframe in which a start moment of one MG is located and an SFN in which the subframe is located.

In addition, if the terminal device is further configured with a parameter mgta, and the parameter mgta indicates an advance of the start moment of the MG relative to a start moment obtained by using the foregoing formula, the actual start moment of the MG is further offset forward by mgta time units or advanced by mgta time units according to Formula (a), which is generally in milliseconds.

Because the receive bandwidth of the terminal device is switched, the terminal device cannot perform data receiving or sending with the network device of the camped cell during bandwidth switching. Based on this, the MG concept is introduced. As described above, the periodicity of the MG is configured through the higher layer signaling MGRP, and the duration of the MG is configured through the higher layer signaling MGL. During the MG, the terminal device may perform at least one of the following operations: First, switch the bandwidth. Second, measure a reference signal of the neighboring cell, for example, an SSB.

### 2. SSB-based measurement timing configuration (SS/PBCH measurement timing configuration, SMTC)

To measure the SSB of the neighboring cell, the network device further needs to configure some other parameters. For example, the network device configures, by configuring measurement objects (Measurement objects), objects for measurement performed by the terminal device, including an SSB frequency, an SSB subcarrier spacing, an SMTC, a trustlist cell, a blocklist cell, and the like. The SMTC represents a time sequence configuration delivered by the network device to the terminal device when the terminal device performs SSB-based measurement on a cell, for example, including an SMTC periodicity, SMTC duration, and an SMTC offset. The configuration of the SMTC actually indicates an available measurement window to the terminal device, to ensure that the terminal device can find, in the available measurement window, an SSB sent by each cell on a frequency.

The protocol specifies that the configuration of the SMTC includes an SMTC1 configuration and an SMTC2 configuration, to support differentiated configuration of SSB measurement for the neighboring cell. The SMTC2 configuration is optional.

The SMTC1 configuration may be understood as that a configuration information element corresponding to the SMTC1 is an SSB-MTC, and includes two sub-information elements: periodicityAndOffset and duration.
periodicityAndOffset indicates the SMTC periodicity (representing a repetition periodicity of a measurement action) and the SMTC offset (representing a start subframe of the measurement action in the periodicity).
duration indicates the SMTC duration (representing duration for which the measurement action should last after the measurement action is initiated).

SMTC2 configuration (optional): A configuration information element corresponding to the SMTC2 is an SSB-MTC2, used to flexibly configure differentiated SSB measurement parameters for a specified neighboring cell.

It should be noted that the SMTC2 is an optional configuration. If the SMTC2 is not configured, it indicates all neighboring cells use an SSB measurement parameter of the SMTC1. If the SMTC2 is configured, a periodicity (periodicity) of the SMTC2 needs to be smaller than periodicityAndOffset of the SMTC1.

For the SMTC, the terminal device determines a moment of the first SMTC based on a periodicity and an offset parameter (periodicityAndOffset). A parameter configuration is usually in the SMTC1 configuration, and provides a periodicity (Periodicity) and an offset parameter (Offset) of the SMTC. The first subframe of each SMTC may be determined according to Formula (b): $\begin{matrix}SFN mod T = FLOOR \left(Offset/10\right) ; \\ If a length of Periodicity is greater than that of sf 5 : \\ subframe = Offset mod 10 ; \\ Otherwise : \\ subframe = Offset or \left(Offset+5\right) ; \\ with T = CEIL \left(Periodicity/10\right) .\end{matrix}$ Formula (b)

SFN represents a system frame number (system frame number), namely, an SFN in which a start moment of the SMTC is located. mod indicates a modulo operator. FLOOR represents rounding down. Periodicity indicates the periodicity of the SMTC. sf5 indicates five subframes. subframe represents a subframe, namely, a subframe in which the start moment of the SMTC is located. Offset is an offset of the start moment of the SMTC. CEIL represents rounding up.

In addition, measurement may be performed without configuring the MG. In this case, the network device needs to configure the SMTC for the terminal device, but does not need to configure the MG.

### 3. RSSI measurement timing configuration (RSSI measurement timing configuration, RMTC)

To measure an RSSI of a cell, the network device further needs to configure some other parameters. For example, the network device configures, by configuring measurement objects (Measurement objects), objects for measurement performed by the terminal device, including bandwidth of the RSSI, a center frequency of the bandwidth of the RSSI, an RMTC, and the like. The RMTC represents a time sequence configuration delivered by the network device to the terminal device when the terminal device performs RSSI-based measurement on a cell, for example, including an RMTC periodicity, RMTC duration, and an RMTC offset. The configuration of the RMTC actually indicates an available RSSI measurement window to the terminal device.

Generally, duration of the RMTC is determined by using a quantity of consecutive symbols for RSSI sampling reported by a physical layer (for example, determined by using measDurationSymbols in an RRC message) and a reference subcarrier spacing and a cyclic prefix used for RSSI measurement (for example, determined by using ref-SCS-CP in the RRC message).

For the RMTC, the terminal device determines a moment of the first RMTC based on an RMTC measurement periodicity (rmtc-Periodicity) and an RMTC offset (rmtc-SubframeOffset). A parameter configuration is usually provided in the configuration of the RMTC. The first subframe of each RMTC may be determined according to Formula (c): $\begin{matrix}SFN mod T = FLOOR \left(rmtc-SubframeOffset/10\right) ; \\ subframe = rmtc - SubframeOffset mod 10 ; \\ T = rmtc - Periodicity / 10 .\end{matrix}$ Formula (c)

SFN represents a system frame number (system frame number), namely, an SFN in which a start moment of the RMTC is located. mod indicates a modulo operator. FLOOR represents rounding down. rmtc-Periodicity indicates the periodicity of the RMTC. subframe represents a subframe, namely, a subframe in which the start moment of the RMTC is located. rmtc-SubframeOffset is an offset of the start moment of the RMTC.

In addition, measurement may be performed without configuring the MG. In this case, the network device needs to configure the RMTC for the terminal device, but does not need to configure the MG.

Generally, the duration of the MG, namely, the MGL, is greater than or equal to duration of a measurement window, to ensure that the terminal device can monitor all reference signals in the window completely. For example, only when the MGL is greater than or equal to the duration of the SMTC, it can be ensured that the terminal device can detect all SSBs in the SMTC. In some embodiments, to minimize overheads of the MG, the configuration of the MG is generally determined by considering a capability of the terminal device and the configuration of the SMTC or the RMTC.

In conclusion, the terminal device needs to perform reference signal measurement in a specific time period, for example, the duration of the MG, the duration of the SMTC, or the duration of the RMTC, but cannot transmit data.

### 4. Extended reality (eXtended Reality, XR) professional (professional, pro) service

The XR pro service is a delay-sensitive service. In other words, the XR pro service has a high delay requirement.

For example, for an XR frame, a downlink transmission delay budget of the XR frame is usually 10 milliseconds (ms). In other words, maximum transmission time of service data corresponding to the XR frame on an air interface is 10 ms. For example, calculation starts from a moment at which the XR frame first arrives at a user plane function (user plane function, UPF) network element, and all service data of the XR frame needs to be successfully received by the terminal device within 10 ms.

For another example, for an XR frame, an uplink transmission delay budget of the XR frame is usually 30 milliseconds (ms). In other words, maximum transmission time of service data corresponding to the XR frame on an air interface is 30 ms. For example, calculation starts from a moment at which the XR frame first arrives at the terminal device, and all service data of the XR frame needs to be successfully received by the network device (for example, a base station or a UPF network element) within 30 ms.

It should be noted that a real-time broadband interaction (real-time broadband communication, RTBC) scenario of the 5th generation mobile communication technology (5th generation mobile communication technology, 5G) aims to implement low-delay, high-reliability, and high-bandwidth communication interaction, and uses low-delay, high-reliability, and high-bandwidth as a target to ensure an immersive experience effect during interaction between a person and a virtual world. Therefore, the XR pro service having the high delay requirement may be used as a typical service in the RTBC scenario.

In some embodiments, data of the XR pro service may be downlink data. For example, a server sends the data of the XR pro service to an XR device through the network device.

In some embodiments, data of the XR pro service may alternatively be uplink data. For example, the XR device sends the data of the XR pro service to the network device. This is not limited in this application.

In some embodiments, the XR pro service may be used for transmission of a plurality of types of data, for example, video data, audio data, or tactile data. The following describes the video data by using an example. The video data may include several ultra-high-definition images (for example, an image captured by a camera, or an image of field of view content), and compression and coding, for example, high efficiency video coding (high efficiency video coding, HEVC), are performed on each image, to generate a large data block. If the video data has a higher definition requirement, a larger data block is obtained by encoding the video data.

The video data typically has a specific periodicity, for example, transmission of the video data is performed at a periodicity of 60 Hz or 90 Hz. Therefore, a challenge is posed to a system capacity and scheduling. For example, the network device (for example, the base station) needs to periodically reserve a large quantity of resources for scheduling, so that the terminal device sends the uplink data, as shown in FIG. 2.

### 5. Discontinuous reception (discontinuous reception, DRX)

In a scenario of dynamic scheduling transmission, the network device (for example, the base station) configures DRX for the terminal device by using RRC signaling, so that the terminal device periodically enters a sleep mode (sleep mode) at some time without monitoring a PDCCH. When the PDCCH needs to be monitored, the terminal device wakes up (wake up) from the sleep mode, achieving an objective of power saving.

DRX implemented by the terminal device in an idle (idle) state is different from that implemented in a connected (connected) state. DRX described below is DRX used when the terminal device is in the connected state, namely, C-DRX (Connected DRX).

In a DRX mechanism, a time period in which the terminal device monitors the PDCCH is referred to as a DRX active period. In the DRX active period, the terminal device turns on a receiver, and continuously monitors the PDCCH. The DRX active period includes at least one of the following: on duration (on Duration), DRX inactivity time (DRX Inactivity Time), or retransmission time (Retransmission Time). In other words, when a DRX on-duration timer (drx-onDurationTimer) is running, a DRX inactivity timer (drx-InactivityTimer) is running, or a DRX retransmission timer (drx-RetransmissionTimer) is running, the terminal device is in the DRX active period.

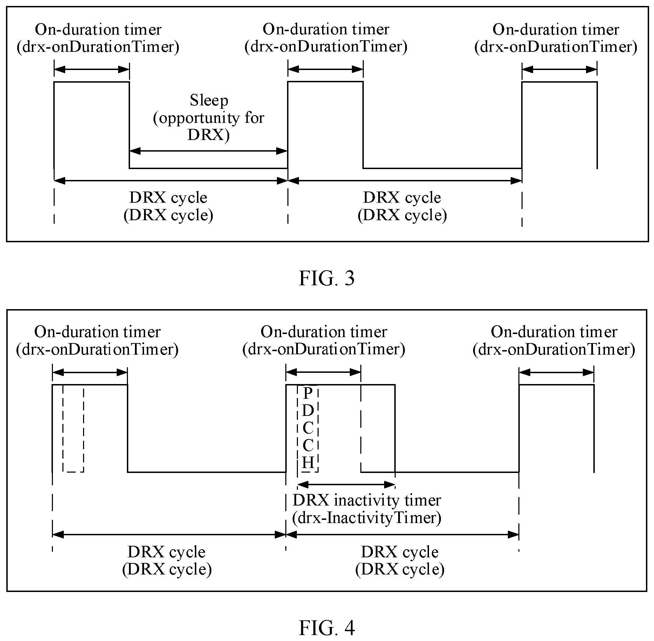

FIG. 3 shows a typical DRX cycle. In FIG. 3, a time period labeled "on Duration" is a time period in which the terminal device monitors the PDCCH. In the time period, the terminal device is in a wake-up state, which is in the "active period", namely, a DRX active time. A time period labeled "opportunity for DRX" is a time period in which the terminal device does not monitor the PDCCH. In the time period, to reduce power consumption, the terminal device is in the sleep mode, which is in a "sleep period", namely, a DRX sleep time. It can be learned from FIG. 3 that a longer DRX sleep time indicates lower power consumption of the terminal device, but correspondingly, a longer service transmission delay.

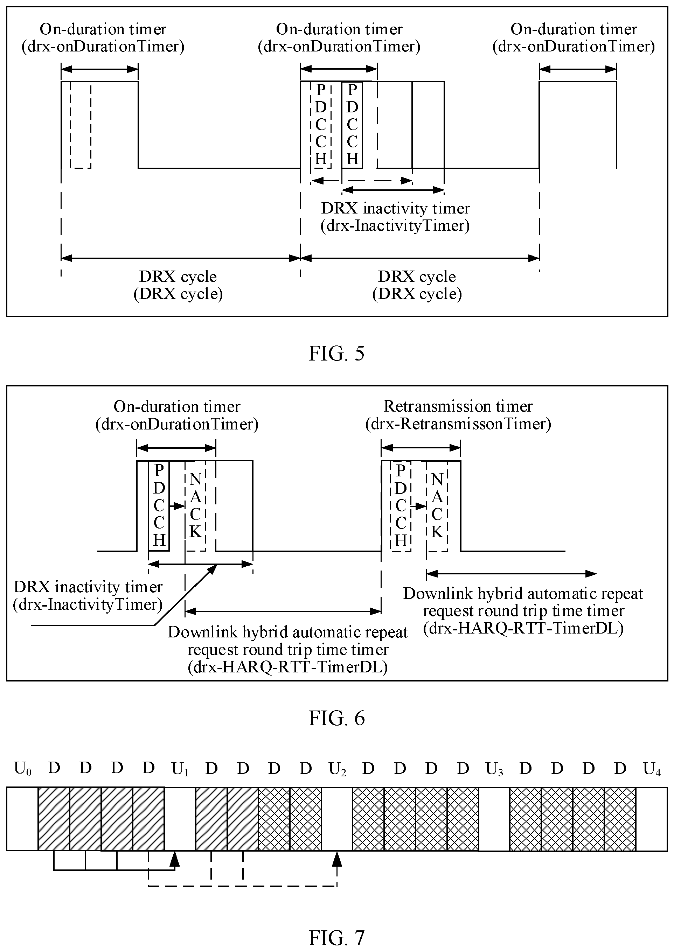

FIG. 4 (or FIG. 5) is a diagram of an operation state of drx-InactivityTimer. In FIG. 4 (or FIG. 5), when drx-InactivityTimer runs, the terminal device monitors the PDCCH.

For example, a subframe 0 is the last subframe of on duration (on Duration). In this case, the network device needs to send data of a large byte to the terminal device, and the data cannot be completely sent in the subframe 0. If the DRX cycle in FIG. 3 is used, the terminal device enters the DRX sleep mode in a subframe 1, and does not receive any downlink data from the network device. The network device can only wait until a current DRX cycle ends, and continue to send, to the terminal device when a next on-Duration time arrives, the data that is not completely transmitted. In other words, the processing mechanism shown in FIG. 3 increases a data processing delay. To reduce the data processing delay, a drx-InactivityTimer is added to the DRX mechanism, as shown in FIG. 4 (or FIG. 5). If drx-InactivityTimer is running, even if the on-Duration time has ended, the terminal device continues to monitor the PDCCH until drx-InactivityTimer expires. It can be learned that a drx-InactivityTimer mechanism can reduce the data processing delay.

In most cases, after the terminal device is scheduled in a specific subframe, and receives or sends data, the terminal device is likely to be continuously scheduled in several subsequent subframes. Therefore, a principle of the drx-InactivityTimer mechanism is as follows: Within a time when the terminal device enters the DRX active time (active time), for example, a time of on Duration, drx-RetransmissionTimer, and drx-InactivityTimer, when the terminal device monitors a PDCCH for initial uplink data transmission scheduling or initial downlink data transmission scheduling, the terminal device starts or restarts a timer drx-InactivityTimer in a next time unit (for example, an adjacent symbol) after the PDCCH ends, and the terminal device remains in the active state until the timer expires, as shown in FIG. 4 (or FIG. 5).

In addition, DRX defines retransmission as follows:
Retransmission-related timers include a DRX retransmission timer (drx-RetransmissionTimer) and a DRX hybrid automatic repeat request round trip time timer (drx-HARQ-RTT-Timer). drx-RetransmissionTimer indicates a longest time for the terminal device to wait for retransmission. When drx-RetransmissionTimer is running, the terminal device monitors the PDCCH used for HARQ retransmission.

In a downlink transmission scenario, drx-RetransmissionTimer may be denoted as drx-RetransmissionTimerDL, and drx-HARQ-RTT-Timer may be denoted as drx-HARQ-RTT-TimerDL. In an uplink transmission scenario, drx-RetransmissionTimer may be denoted as drx-RetransmissionTimerUL, and drx-HARQ-RTT-Timer may be denoted as drx-HARQ-RTT-TimerUL.

Downlink retransmission is used as an example. As shown in FIG. 6, if decoding of a transport block (transport block, TB) corresponding to a downlink HARQ process fails, the terminal device may assume that retransmission occurs at least after drx-HARQ-RTT-TimerDL. Therefore, when drx-HARQ-RTT-TimerDL is running, the terminal device does not need to monitor the PDCCH. When drx-HARQ-RTT-TimerDL expires, and data received in the HARQ process corresponding to drx-HARQ-RTT-TimerDL is not successfully decoded, the terminal device starts drx-RetransmissionTimerDL for the HARQ process in a next time unit (for example, an adjacent symbol) after drx-HARQ-RTT-TimerDL ends. When drx-RetransmissionTimerDL is running, the terminal device monitors the PDCCH used for HARQ retransmission.

It is easy to understand that operation times of drx-onDurationTimer, drx-InactivityTimer, and drx-RetransmissionTimer are all in the active time (active time). To be specific, the terminal device wakes up and monitors control information when these timers are started. If a PDCCH for scheduling initial transmission is monitored, the terminal device starts drx-InactivityTimer in a next time unit (for example, an adjacent symbol) after a symbol occupied by the PDCCH.

It should be noted that if the terminal device does not receive or send any data within a specific time (for example, 4 ms), the terminal device may enter the sleep mode, for example, a non-PDCCH monitoring interval of DRX.

It should be supplemented that the C-DRX technology also affects uplink transmission. Specifically, when the terminal device sends a medium access control protocol data unit (media access control protocol data unit, PDU, MAC PDU), the terminal device starts drx-HARQ-RTT-TimerUL, and starts drx-RetransmissionTimerUL in a next time unit (for example, an adjacent symbol) after the timer expires. During running of drx-RetransmissionTimerUL, the terminal device continuously monitors the PDCCH.

During running of drx-RetransmissionTimer, if the terminal device monitors retransmission used to schedule a HARQ process corresponding to the timer, the terminal device may disable or stop drx-RetransmissionTimer.

### 6. HARQ feedback

Downlink transmission is used as an example. Downlink data may be transmitted through a physical downlink shared channel (physical downlink shared channel, PDSCH). The network device (for example, the base station) indicates the PDSCH by using DCI, and the terminal device performs receiving and channel decoding based on the PDSCH indicated by the DCI. Then, the terminal device performs HARQ feedback based on a decoding result, to notify the network device whether the data is correctly received. For example, if the PDSCH decoding succeeds, the terminal device may feed back an acknowledgment (acknowledgement, ACK), and the network device considers, based on the ACK, that the data is successfully received. On the contrary, if the PDSCH decoding fails, the terminal device may feed back a negative acknowledgment (negative acknowledgement, NACK), and the network device may learn, based on the NACK, that data decoding fails, and schedule retransmission of the data, to ensure reliability of data transmission. Both the ACK and the NACK are referred to as HARQ feedback, or may be described as HARQ-ACK information, HARQ-ACK feedback, or the like.

FIG. 7 shows a case of HARQ feedback. In FIG. 7, a block corresponding to the letter "D" represents a downlink slot, and a block corresponding to the letter "U" represents an uplink slot. Three PDSCHs occupy downlink slots. HARQ feedback for the three PDSCHs is transmitted in slot U₁, and HARQ feedback for another three PDSCHs is transmitted in slot U₂.

Generally, a feedback slot (for example, the slot U₁ or the slot U₂) of the PDSCH is indicated by using the DCI. Specifically, when the DCI indicates a PDSCH resource, the DCI also indicates, by using a field, a slot in which HARQ feedback of the PDSCH is located, for example, indicates an offset from the PDSCH to the HARQ feedback. The field may be a PDSCH-to-HARQ_feedback timing indicator, and is usually referred to as a k1 value. In other words, the DCI indicates a moment of the PDSCH and indicates a moment of the HARQ feedback by using an offset.

### 7. Semi-persistent transmission

An XR service typically has a specific periodicity. The network device (for example, the base station) may configure semi-persistent transmission, for example, a configured grant (configured grant, CG), for an XR uplink service. The network device configures, for the terminal device by using higher layer signaling (such as an RRC message) or by using higher layer signaling and the DCI, an uplink resource, for example, a transmission periodicity (namely, an interval between transmissions), a start moment of the semi-persistent transmission (for example, an offset value is indicated), and a transmission resource (for example, a time domain resource, a frequency domain resource, a modulation and coding scheme (modulation and coding scheme, MCS), or the like). In this way, the terminal device may perform transmission on the configured transmission resource (for example, the time domain resource, the frequency domain resource, or the like) based on the configured transmission periodicity by using the configured modulation and coding scheme.

In a related technology, there are two CG transmission methods, namely, a type (type) 1 and a type 2.

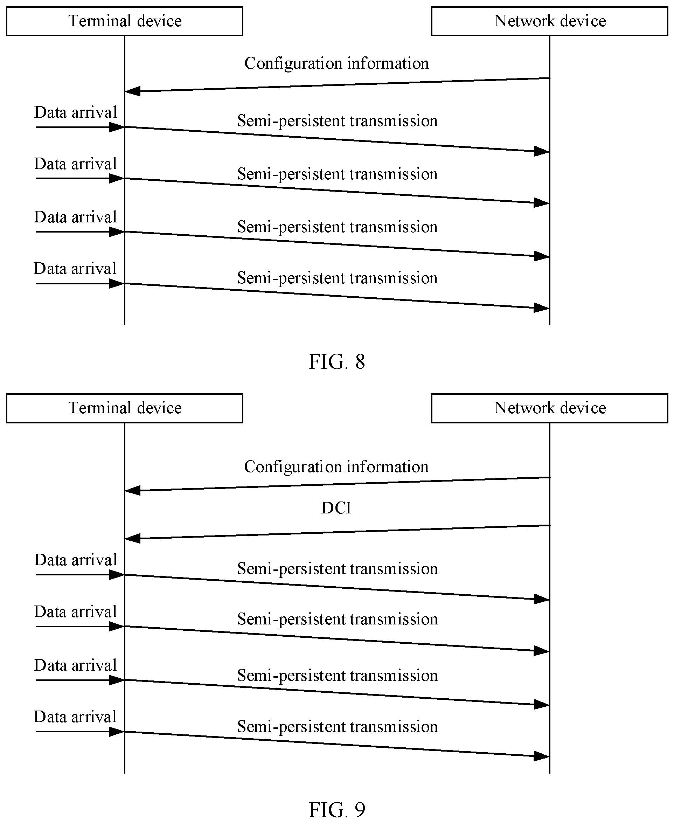

As shown in FIG. 8, for the type 1 configuration method, the network device only needs to send configuration information to the terminal device by using higher layer signaling such as an RRC message. The configuration information is used to configure a transmission periodicity, a time domain offset value, a transmission resource, and the like. The terminal device may determine a moment of a first transmission opportunity based on a receiving moment of the higher layer signaling and the time domain offset value, determine a time domain resource and a frequency domain resource of each transmission opportunity based on a parameter of the transmission resource (for example, time domain resource allocation, frequency domain resource allocation, or the MCS), and determine a moment of a transmission opportunity in each subsequent semi-persistent transmission based on a periodicity configured by using the higher layer signaling.

It should be supplemented that in this application, one semi-persistent transmission may include one or more transmission opportunities. The transmission periodicity is a periodicity of the semi-persistent transmission. For example, if the transmission periodicity is 20 ms, it means that the terminal device performs semi-persistent transmission once every 20 ms. For a process of determining the time domain resource and the frequency domain resource of each transmission opportunity in each semi-persistent transmission, refer to the descriptions in the foregoing paragraphs.

As shown in FIG. 9, for the type 2 configuration method, usually, the network device first sends configuration information by using the higher layer signaling, and pre-configures some transmission parameters, for example, the transmission periodicity, by using the configuration information. Then, the network device indicates a related parameter of the transmission resource by using control information (for example, the DCI), for example, determines a moment of a first transmission opportunity by using the DCI (for example, indicates an offset between the moment of the first transmission opportunity and the DCI by using the DCI), and indicates a time domain resource and a frequency domain resource of each transmission opportunity by using a field in the DCI.

Then, the network device periodically schedules the uplink resource for the terminal device based on the transmission opportunity configured by using the higher layer signaling. For a size (for example, a time domain resource, a frequency domain resource, and an MCS) of the uplink resource, refer to the foregoing descriptions. Details are not described again.

The network device periodically reserves a resource for the terminal device, and the terminal device performs transmission on the periodic resource based on the foregoing parameters until the network device releases (or deactivates) the semi-persistent transmission. Specifically, the network device may indicate, by using the higher layer signaling or the DCI, to release (or deactivate) the semi-persistent transmission.

It should be supplemented that when configuring a CG configuration for the terminal device, the network device determines, by using the higher layer signaling, for example, by using signaling (harq-ProcID-Offset or harq-ProcID-Offset2-r16 and nrofHARQ-Processes) in ConfiguredGrantConfig, a HARQ process that can be used for the CG configuration. nrofHARQ-Processes is used to determine a quantity of available HARQ processes, and harq-ProcID-Offset or harq-ProcID-Offset2-r16 is used to determine a start index of the HARQ process.

For example, when harq-ProcID-Offset2-r16=3 and nrofHARQ-Processes=4, a HARQ process number that can be used by the CG configuration is {3, 4, 5, 6}, meaning that HARQ mapping for each transmission in this CG configuration follows this order.

It should be supplemented that, in the CG configuration, for a downlink transmission scenario, the network device first sends downlink semi-persistent scheduling (semi-persistent scheduling, SPS) configuration information to the terminal device, to configure an SPS configuration for the terminal device. Then, the network device sends the DCI to the terminal device, indicates, by using control information (for example, the DCI), to activate the SPS configuration, and then indicates, by using the DCI, to deactivate the SPS configuration. When the DCI indicates to deactivate the SPS configuration, the terminal device needs to perform HARQ feedback on the DCI.

However, in a specific time period (for example, the duration of the MG, the duration of the SMTC, or the duration of the RMTC), the terminal device needs to perform reference signal measurement, and cannot normally receive and send data. This may increase a service data transmission delay, and affect service transmission performance, especially for a delay-sensitive service such as the XR pro service.

Specifically, the MG is used as an example to provide the following examples:
Example 1: For example, the terminal device sends the service data. As shown in FIG. 2, when the terminal device needs to send and/or receive data during the MG, the terminal device cannot receive or send data normally, affecting transmission performance of the XR pro service.

Further, a case in which the uplink data is sent in a transmission occasion of the configured grant may be understood as follows: When a transmission occasion of the terminal device conflicts (or overlaps) with the MG in terms of time, the terminal device performs reference signal measurement based on the MG configuration, and cannot send the uplink data on the transmission occasion, increasing a service transmission delay.

Example 2: drx-RetransmissionTimer is used as an example. During running of drx-RetransmissionTimer, the terminal device continuously monitors the PDCCH.

For downlink transmission, after the terminal device sends the HARQ feedback, and when there is data with failed PDSCH decoding, the terminal device starts the drx-RetransmissionTimerDL timer. However, if drx-RetransmissionTimerDL conflicts (or overlaps) with the MG in terms of time, the terminal device performs reference signal measurement based on the MG configuration, and cannot receive any data. As a result, the terminal device may miss an opportunity of receiving retransmission, affecting transmission performance of the XR pro service.

For uplink transmission, after sending the MAC PDU, the terminal device starts the drx-RetransmissionTimerUL timer. However, if drx-RetransmissionTimerUL conflicts (or overlaps) with the MG in terms of time, the terminal device performs reference signal measurement based on the MG configuration, and cannot receive any data. As a result, the terminal device may miss an opportunity of receiving retransmission indication information, affecting transmission performance of the XR pro service.

Example 3: A HARQ feedback time is used as an example. When the HARQ feedback time of the terminal device conflicts (or overlaps) with the MG in terms of time, the terminal device performs reference signal measurement based on the MG configuration, and cannot perform HARQ feedback. As a result, the network device cannot receive the HARQ feedback in a timely manner, and misses an opportunity for scheduling retransmission. Consequently, data cannot be completely received, and a service transmission delay is increased. If an offset value between the PDSCH and the HARQ feedback is adjusted, the HARQ feedback is likely to be late. Consequently, the network device side has no time to perform data retransmission scheduling, affecting transmission performance of the XR pro service.

In view of this, this application provides a communication method. The method may be applied to the system shown in FIG. 1. The method includes: A terminal device determines a first overlapping time period when a first time period overlaps with a first measurement time period, and sends first HARQ feedback or monitors first control information in the first overlapping time period, where the first overlapping time period is a time period in which the first time period overlaps with the first measurement time period. The first time period is used to transmit the first HARQ feedback, and the first HARQ feedback is determined based on a decoding result of first data. Alternatively, the first time period is used to monitor first control information, and the first control information indicates to retransmit first data. The first measurement time period is determined based on a first configuration, the first configuration is a configuration for sending a first reference signal by a first cell, and a measurement result of the first reference signal indicates signal quality of the first cell. The first cell includes a serving cell or a candidate cell. The first data is data sent or received by using a shared channel (shared channel, SCH) before a start moment of the first time period.

In other words, even if the first time period overlaps with the first measurement time period, the terminal device still performs a normal operation in the first overlapping time period.

For example, when the first time period is used to transmit the first HARQ feedback, the terminal device sends the first HARQ feedback in the first overlapping time period, instead of performing reference signal measurement. Compared with a case in which the terminal device measures the first reference signal in the first overlapping time period and then sends the first HARQ feedback after the first overlapping time period, in this application, the terminal device can send the first HARQ feedback as early as possible, so that a first network device performs data scheduling in a timely manner based on the first HARQ feedback. This reduces a service data transmission delay, and mitigates impact of reference signal measurement on data transmission to some extent.

For another example, when the first time period is used to monitor the first control information, the terminal device monitors the first measurement and control information in the first overlapping time period, instead of performing reference signal measurement. Compared with a case in which the terminal device measures the first reference signal in the first overlapping time period and then monitors the first control information after the first overlapping time period, in this application, the terminal device can receive the first control information as early as possible. This reduces a service data transmission delay, and mitigates impact of reference signal measurement on data transmission to some extent.

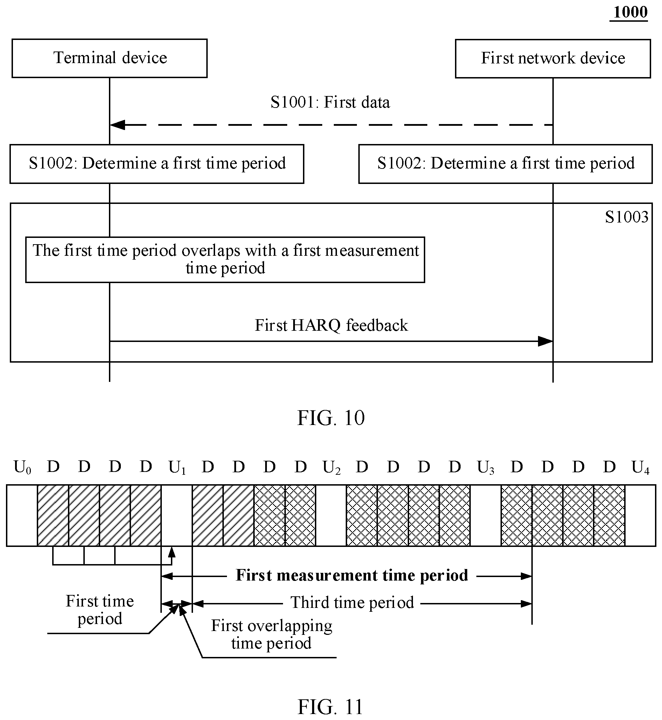

The following describes in detail the communication method provided in an embodiment of this application with reference to FIG. 10. A communication method 1000 provided in this embodiment of this application includes the following operations.

(Optional) S1001: A first network device sends first data to a terminal device. Correspondingly, the terminal device receives the first data from the first network device.

The first data is data transmitted through an SCH (for example, a PDSCH).

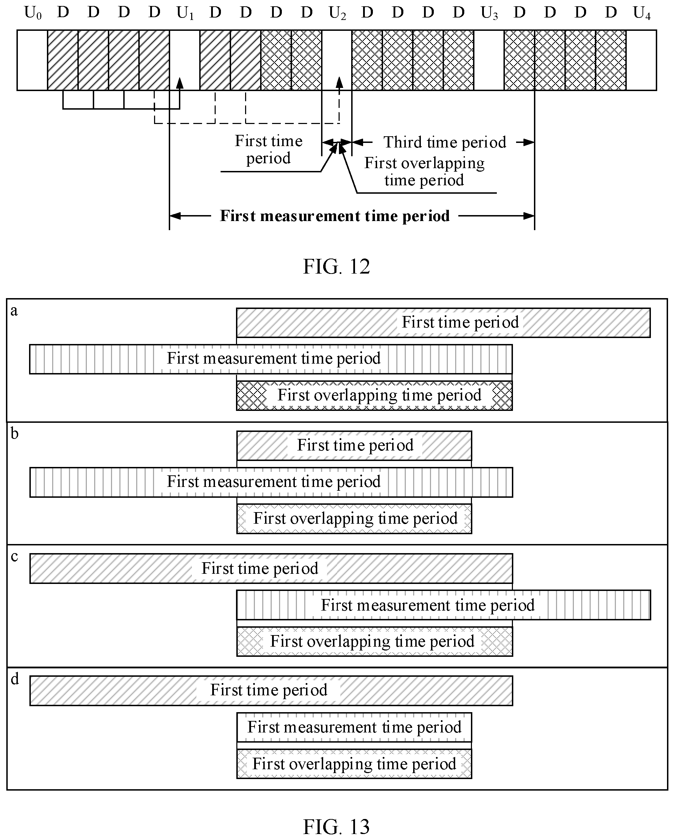

Optionally, the first data is transmitted through the PDSCH, and a HARQ process corresponding to the PDSCH may be denoted as a first HARQ. For example, in FIG. 11 (or FIG. 12), a block corresponding to the letter "D" represents a downlink slot, and a block corresponding to the letter "U" represents an uplink slot. The first data is transmitted through three PDSCHs, and the three PDSCHs each occupy three downlink slots.

For the terminal device, the terminal device receives the first data and performs channel decoding on the first data, to obtain a decoding result of the first data.

S1002: The terminal device determines a first time period.

Similarly, the first network device determines the first time period.

The first time period is used to transmit first HARQ feedback.

The first HARQ feedback is determined based on the decoding result of the first data. For example, if the terminal device successfully decodes the first data, the first HARQ feedback is an ACK; otherwise, if the terminal device fails to decode the first data, the first HARQ feedback is a NACK.

Alternatively, the first HARQ feedback is determined based on control information. In a case, the control information may be DCI for indicating to deactivate downlink semi-persistent scheduling (semi-persistent scheduling, SPS). In this case, the terminal device needs to perform HARQ feedback on the control information.

For example, in FIG. 11, the first time period may be a time period corresponding to an uplink slot U₁.

For example, in FIG. 12, the first time period may be a time period corresponding to an uplink slot U₂.

It should be understood that, for the terminal device, the terminal device receives the control information, and the control information indicates resources of the three PDSCHs and a k1 value, so that the terminal device determines, based on time domain positions of the PDSCHs and the k1 value, a slot in which the first HARQ feedback is located, for example, the uplink slot U₁ in FIG. 11 or the uplink slot U₂ in FIG. 12. The control information may be one piece of control information a, or may be a plurality of pieces of control information, for example, three pieces of control information, namely, control information a, control information b, and control information c.

It should be noted that in this application, the first data is data received by the terminal device by using the SCH before a start moment of the first time period.

S1003: The terminal device sends the first HARQ feedback to the first network device in the first overlapping time period when the first time period overlaps with the first measurement time period. Correspondingly, the first network device receives the first HARQ feedback from the terminal device.

For example, the terminal device determines the first overlapping time period, and sends the first HARQ feedback to the first network device in the first overlapping time period when the first time period overlaps with the first measurement time period. Correspondingly, the first network device determines the first overlapping time period, and receives the first HARQ feedback from the terminal device in the first overlapping time period.

For example, when the first time period overlaps with the first measurement time period, the terminal device does not measure the first reference signal in the first overlapping time period, and the terminal device sends the first HARQ feedback to the first network device in the first overlapping time period. In other words, in the first overlapping time period, not measuring the first reference signal and sending the first HARQ feedback occur simultaneously.

For the first time period, refer to the descriptions of S1002. Details are not described again.

The first measurement time period is described as follows:
The first measurement time period is determined based on a first configuration. The first configuration is a configuration for sending the first reference signal by a first cell.

For example, the terminal device receives configuration information X from the first network device. The configuration information X indicates the first configuration. The terminal device determines the first measurement time period based on the first configuration. The first configuration may indicate at least one of the following: a periodicity of sending the first reference signal by the first cell, duration of sending the first reference signal by the first cell, and the like.

Optionally, the first configuration is a measurement timing configuration, for example, an SMTC (or an RMTC). The first configuration indicates an SMTC periodicity, SMTC duration, an SMTC offset, and the like. For details, refer to the descriptions in the term explanation part. The first measurement time period is duration of the SMTC. For example, the first measurement time period may be one SMTC.

Optionally, the first configuration is a channel state information-reference signal (channel state information-reference signal, CSI-RS) configuration, and the CSI-RS configuration indicates a sending periodicity and duration of a CSI-RS. For details, refer to a related 3GPP technical specification. The first measurement time period is a time period in which the CSI-RS is sent. For example, the first measurement time period may be a time period in which the CSI-RS is continuously sent within one sending periodicity.

In addition, in a possible alternative manner, the first measurement time period may alternatively be determined based on an MG configuration. The MG configuration indicates an MGRP, an MGL, an offset, and the like. The first measurement time period is a time period corresponding to an MG. For example, the first measurement time period may be one MG.

It should be noted that the first cell may include a candidate cell. In some cases, the first cell may alternatively include a serving cell. This is not limited in this application.

The first overlapping time period is a time period in which the first time period overlaps with the first measurement time period, and is specifically described by using the following four cases:
Case a: The start moment of the first time period is later than a start moment of the first measurement time period, and an end moment of the first time period is later than or equal to an end moment of the first measurement time period. In this case, a start moment of the first overlapping time period is the same as the start moment of the first time period, and an end moment of the first overlapping time period is the same as the end moment of the first measurement time period, as shown in a block in which the letter 'a' is located in FIG. 13.
Case b: The start moment of the first time period is later than a start moment of the first measurement time period, and an end moment of the first time period is earlier than an end moment of the first measurement time period. In this case, a start moment of the first overlapping time period is the same as the start moment of the first time period, and an end moment of the first overlapping time period is the same as the end moment of the first time period, that is, the first overlapping time period is the first time period, as shown in a block in which the letter 'b' is located in FIG. 13.
Case c: The start moment of the first time period is earlier than or equal to a start moment of the first measurement time period, and an end moment of the first time period is earlier than an end moment of the first measurement time period. In this case, a start moment of the first overlapping time period is the same as the start moment of the first measurement time period, and an end moment of the first overlapping time period is the same as the end moment of the first time period, as shown in a block in which the letter 'c' is located in FIG. 13.
Case d: The first overlapping time period may alternatively include an entire time period of the first measurement time period. For example, the start moment of the first time period is earlier than or equal to a start moment of the first measurement time period, and an end moment of the first time period is later than or equal to the first measurement time period. In this case, a start moment of the first overlapping time period is the same as the start moment of the first measurement time period, and an end moment of the first overlapping time period is the same as the end moment of the first measurement time period, as shown in a block in which the letter 'd' is located in FIG. 13.

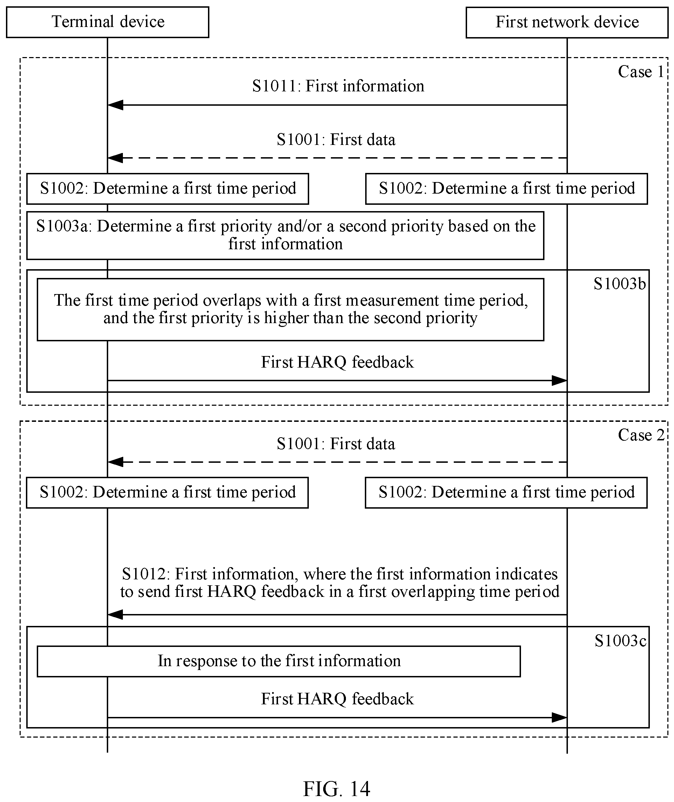

In some embodiments, as shown in "case 1" in FIG. 14, the terminal device further performs S1011:
S1011: The first network device sends first information to the terminal device. Correspondingly, the terminal device receives the first information from the first network device.

The first information indicates a first priority and/or a second priority, the first priority is used to determine a priority of the first time period, and the second priority is a priority of the first configuration.

In an implementation, the first priority may be a priority of the first HARQ. It may alternatively be understood that the priority of the first time period is determined based on the priority of the first HARQ, for example, a priority of a time period corresponding to the first HARQ feedback.

Manner 1: The first information is control information a, and the control information a indicates the first priority. It may be understood that the priority of the first HARQ (namely, the first priority) may be dynamically indicated.

Preferably, the control information a further schedules the first data.

In this scenario, the control information a usually explicitly indicates a HARQ process corresponding to the PDSCH, namely, the first HARQ, so that the priority of the first HARQ can be determined by using the control information a for scheduling the PDSCH. The PDSCH indicated by the control information a is used to transmit the first data.

In an implementation, the control information a may explicitly carry priority indication information, to indicate the priority of the first HARQ. For example, the priority indication information carried in the control information a in a conventional technology may be reused (in the conventional technology, the control information a carries 1-bit priority indication information, and the priority indication information indicates a priority of a HARQ codebook). Alternatively, the control information a (for example, the DCI) has a plurality of formats, so that the priority of the first HARQ can be determined based on a format of the control information a (for example, the DCI). In this case, the control information a (for example, the DCI) may not explicitly indicate the first priority. It may be understood that the control information a (for example, the DCI) implicitly indicates the first priority. For example, the format of the control information a is a format 1, and a format of control information b is a format 2. A priority of the format 1 is high, which may be understood that a priority indicated by the control information a is high.

In another implementation, the control information a indicates a priority of the PDSCH. The PDSCH corresponds to the first HARQ. Therefore, the priority of the PDSCH is the same as the priority of the first HARQ. For example, if the priority of the PDSCH is high, the priority of the first HARQ is high.

Optionally, the control information a may be further used to activate semi-persistent transmission shown in FIG. 9. For example, when the control information a is used to activate downlink semi-persistent scheduling (SPS), the control information a may be used to indicate transmission resources of several subsequent SPS PDSCHs. Therefore, the priority indicated by the control information a may be applicable to all semi-persistent transmission opportunities in the semi-persistent transmission configuration, for example, priorities of all semi-persistently transmitted PDSCHs.

It should be noted that, in Manner 1, the terminal device may first perform S1011, and then perform S1001, or the terminal device may simultaneously perform S1001 and S1011.

Manner 2: The first information is configuration information a, the configuration information a indicates a time-frequency resource of the SCH and a periodicity of the SCH, and the configuration information a further indicates the first priority. It may be understood that the first time period or the priority of the first HARQ (namely, the first priority) is semi-statically indicated. For example, the first network device (for example, a base station) sends the first information by using higher layer signaling, for example, RRC signaling, and configures the first priority for the semi-persistent transmission by using the first information. For example, the first priority may be a priority of the SCH. For example, when the SCH is scheduled by using the SPS, priorities of all SCHs in the SPS configuration are first priorities. Data on each SCH, for example, the first data, has a corresponding HARQ process. Therefore, it may also be considered that a priority of the HARQ process corresponding to the SCH is the first priority.

In a case, that only the HARQ process corresponding to the SCH is the first priority may alternatively be understood as that when a same HARQ process number is used for another case, for example, dynamic scheduling indicated by the DCI, the priority of the HARQ process is not the first priority. For example, if the base station configures the first priority for the SPS by using the first information, and the SPS PDSCH corresponds to a HARQ process ID 1, it may be considered that the HARQ process ID 1 corresponding to the current SPS PDSCH is the first priority. For a specific time, if the PDSCH indicated by the DCI corresponds to the HARQ process ID 1, and the DCI is not active DCI corresponding to the SPS configuration, a priority of the HARQ process ID 1 does not exist or is not the first priority.

Manner 3: The first information is configuration information a, and the configuration information a further indicates the first priority. It may be understood that the priority of the first HARQ (namely, the first priority) is semi-statically indicated. For example, the first network device (for example, a base station) configures a priority for each HARQ process by using higher layer signaling, for example, RRC signaling. For example, the HARQ priority may be shown as follows:

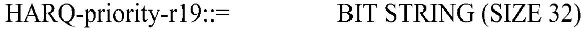

The higher layer signaling includes up to 32 bits, and each bit corresponds to one HARQ process. One-to-one mapping may be performed in an ascending order. For example, the first bit in the BIT STRING corresponds to a HARQ process ID 0, the second bit corresponds to a HARQ process ID 1, and so on. Alternatively, on the contrary, one-to-one mapping may be performed in a descending order. For example, the first bit in the BIT STRING corresponds to a HARQ process ID 31, the second bit corresponds to a HARQ process ID 30, and so on. For example, each HARQ process has two priorities. When a value corresponding to a HARQ process is a first value, for example, '1' (or '0'), it indicates that the priority of the HARQ process is high. When a value corresponding to a HARQ process is a second value, for example, '0' (or '1'), it indicates that the priority of the HARQ process is low.

In addition, when an actual quantity of HARQ processes of the terminal device is less than a maximum quantity of processes (namely, 32), redundant bits may be ignored. The ignored bits may be calculated starting from a most significant bit (most significant bit, MSB) to a least significant bit (least significant bit, LSB), or may be calculated starting from an LSB to an MSB.

When a HARQ process is indicated as the first priority, all SCHs corresponding to the HARQ process may be considered as having the first priority. Alternatively, when a HARQ process is indicated as a first priority, HARQ feedback corresponding to the HARQ process may be considered as having the first priority.

In the ascending order mapping manner, if the first HARQ is a HARQ identified by the HARQ process ID 0, a value indicated by the first bit in the BIT STRING is the first value, indicating that the first priority is high. If the first HARQ is a HARQ identified by the HARQ process ID 1, a value indicated by the second bit in the BIT STRING is the first value, indicating that the first priority is high.

It should be noted that, in Manner 2 or Manner 3, the terminal device may first perform S1011, and then perform S1001.

Manner 4: The first information is configuration information X, the configuration information X indicates the first configuration, and the configuration information X further indicates the second priority.

An example in which the second priority is a priority of the MG is used. The priority of the MG may include two levels: high or low. Alternatively, the priority of the MG may include a plurality of levels. For example, the priority of the MG includes 16 levels, for example, an MG priority 1, an MG priority 2, an MG priority 3, ..., an MG priority 15, and an MG priority 16. According to an ascending order, the 16 priorities may be from high to low (for example, the MG priority 1 is the highest among the 16 priorities) or from low to high (for example, the MG priority 16 is the highest among the 16 priorities).

When the terminal device performs S1011, S1003 includes S1003a and S1003b.

S1003a: The terminal device determines the first priority and/or the second priority based on the first information.

For example, the first information may explicitly or implicitly indicate the first priority. In this way, the terminal device may determine the first priority based on the first information, or determine whether the first priority is higher than the second priority.

For another example, the first information may indicate the second priority. In this way, the terminal device may determine the second priority based on the first information, or determine whether the first priority is higher than the second priority.

It should be noted that, for the terminal device, the terminal device may first determine the first priority and then determine the second priority, or the terminal device may first determine the second priority and then determine the first priority, or the terminal device may simultaneously determine the first priority and the second priority. This is not limited in this application.

S1003b: The terminal device sends the first HARQ feedback to the first network device in the first overlapping time period when the first time period overlaps with the first measurement time period, and the first priority is higher than the second priority. Correspondingly, the first network device receives the first HARQ feedback from the terminal device in the first overlapping time period.

Optionally, it is assumed that the second priority is the priority of the MG, and the following three cases (case 1 to case 3) are used for description:
Case 1: If the first priority (namely, the priority of the first HARQ) is high, it means that the priority of the first HARQ is higher than any one of all the (for example, 16) MG priorities. In this case, when the first time period overlaps with the first measurement time period, the terminal device sends the first HARQ feedback in the first overlapping time period, to ensure transmission performance of a high-priority service.

If the first priority (namely, the priority of the first HARQ) is low, it means that the priority of the first HARQ is lower than any one of all the (for example, 16) MG priorities. In this case, when the first time period overlaps with the first measurement time period, the terminal device does not send the first HARQ feedback in the first overlapping time period, but measures the first reference signal, thereby ensuring accuracy of reference signal measurement.

For example, the first priority may exist in a form of switch. For example, when the first priority is configured, it indicates that the first priority is high, or when the first priority is not configured, it indicates that the first priority is low.

Case 2: If the first priority (namely, the priority of the first HARQ) is high, it means that the priority of the first HARQ is higher than any one of M MG priorities, or higher than any one of M-1 MG priorities. If the priority of the first HARQ is low, it means that the priority of the first HARQ is lower than any one of M MG priorities, or lower than any one of M-1 MG priorities.

Any one of the M MG priorities is lower than or equal to a first threshold.

For example, the first threshold is the MG priority 8 (or 9). In an example, among the 16 MG priorities, eight priorities are lower than the first threshold, namely, the MG priority 9, the MG priority 10, ..., and the MG priority 16, and eight priorities are higher than the first threshold, namely, the MG priority 1, the MG priority 2, ..., and the MG priority 8. In this case, the priority of the first HARQ is higher than the MG priority 9 to the MG priority 16, and the priority of the first HARQ is lower than the MG priority 1 to the MG priority 8.

Alternatively, on the contrary, among the 16 MG priorities, eight priorities are lower than the first threshold, namely, the MG priority 1, the MG priority 2, ..., and the MG priority 8, and eight priorities are higher than the first threshold, namely, the MG priority 9, the MG priority 10, ..., and the MG priority 16. In this case, the priority of the first HARQ is higher than the MG priority 1 to the MG priority 8, and the priority of the first HARQ is lower than the MG priority 9 to the MG priority 16.

For example, the priority of the MG may reuse gapPriority-r17 signaling in GapConfig in an RRC message. The first threshold may be semi-statically indicated by a base station through higher layer signaling (for example, through an RRC message), may be preconfigured before delivery from the factory, or may be dynamically indicated.

In this case, in a possible case, after the first threshold or the second priority is configured, the first priority may not be explicitly configured. In other words, the first priority may be determined based on the first threshold. Alternatively, in a case, the first threshold may be understood as the first priority.

Alternatively, in a case, after the first priority is configured, the second priority may not be explicitly configured. In other words, the first priority and the second priority may be logical concepts, and may not be indicated by using explicit physical signaling. Alternatively, the first priority or the second priority may be configured in a form of switch. For example, when the first priority is configured in the form of switch, if the configuration information indicates "on", for example, enabled, or "off", for example, disabled, it may be considered that the first priority is higher than the second priority.

Case 3: If the second priority (for example, the priority of the MG) is high, it means that the priority of the MG is higher than any one of all the (for example, two) HARQ priorities. In this case, when the first time period overlaps with the first measurement time period, the terminal device does not send the first HARQ feedback in the first overlapping time period, but measures the first reference signal, thereby ensuring performance of reference signal measurement.

If the second priority (for example, the priority of the MG) is low, it means that the priority of the MG is lower than any one of all the (for example, two) HARQ priorities. In this case, when the first time period overlaps with the first measurement time period, the terminal device sends the first HARQ feedback in the first overlapping time period, to ensure transmission performance of a high-priority service.

In other words, when the first priority is higher than the second priority, the terminal device sends the first HARQ feedback in the first overlapping time period, prioritizing transmission performance of service data.

It should be noted that the first HARQ feedback may include HARQ feedback for a plurality of pieces of data (or a plurality of PDSCHs). In this case, it may be considered that the priority of the first HARQ feedback may be a priority of HARQ feedback with a highest priority in the HARQ feedback for the plurality of pieces of data. For example, when the first HARQ feedback includes any HARQ feedback of a high priority, the priority of the first HARQ is higher than the priority of the first configuration.

It should be noted that, in any one of the foregoing manners, a sequence of performing S1002 and S1003a by the terminal device may change. For example, the terminal device may first perform S1003a and then perform S1002, or may simultaneously perform S1002 and S1003a.

In some embodiments, as shown in "case 2" in FIG. 14, the terminal device further performs S1012:
S1012: The first network device sends the first information to the terminal device. Correspondingly, the terminal device receives the first information from the first network device.

The first information indicates to send the first HARQ feedback in the first overlapping time period. Alternatively, the first information indicates not to measure the first reference signal in the first overlapping time period.

When the terminal device performs S1012, S1003 includes S1003c:
S1003c: The terminal device sends, in response to the first information, the first HARQ feedback to the first network device in the first overlapping time period when the first time period overlaps with the first measurement time period.

In other words, it may be understood that the first network device indicates the terminal device to send the first HARQ feedback in the first overlapping time period, helping ensure transmission performance of service data.

The foregoing describes the operation performed by the communication device (for example, the first network device or the terminal device) in the first overlapping time period by using an example in which the first time period is used to transmit the first HARQ feedback.

The following describes an operation performed by a communication device (for example, a first network device or a terminal device) in a first overlapping time period by using an example in which a first time period is used to monitor first control information.

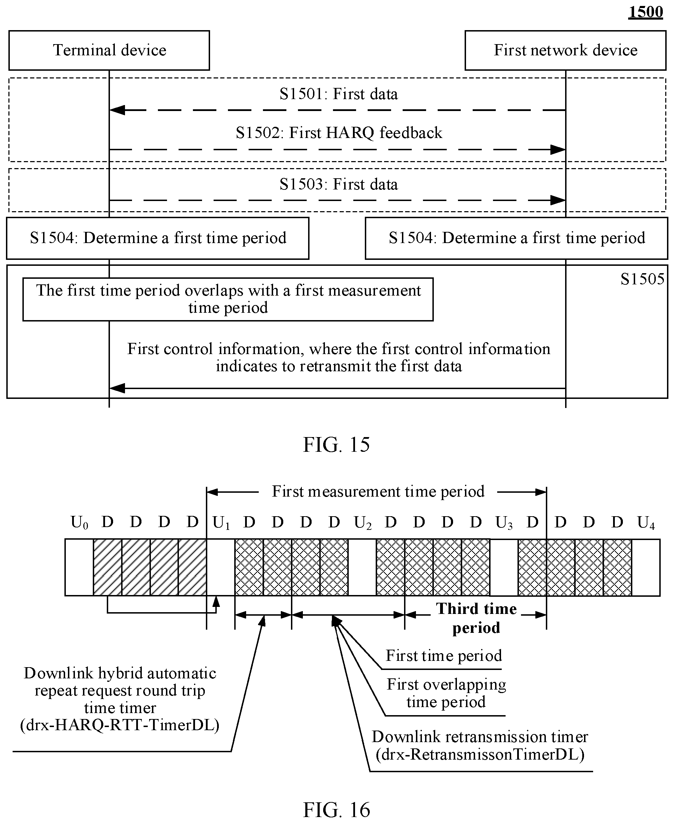

The following describes in detail the communication method provided in an embodiment of this application with reference to FIG. 15. A communication method 1500 provided in this embodiment of this application includes the following operations.

Optionally, the first network device sends downlink data to the terminal device, or may receive uplink data from the terminal device. The following uses first data as an example for description in S1501 and S1503.

(Optional) S1501: The first network device sends the first data to the terminal device. Correspondingly, the terminal device receives the first data from the first network device.

The first data is data transmitted through an SCH (for example, a PDSCH). In this case, the first data is downlink data.

Optionally, the first data is transmitted through the PDSCH, and a HARQ process corresponding to the PDSCH is denoted as a first HARQ. For example, in FIG. 16, a block corresponding to the letter "D" represents a downlink slot, and a block corresponding to the letter "U" represents an uplink slot. The first data is transmitted through four PDSCHs, and the four PDSCHs each occupy four downlink slots.

For the terminal device, the terminal device receives the first data and performs channel decoding on the first data, to obtain a decoding result of the first data.

(Optional) S1502: The terminal device sends first HARQ feedback to the first network device. Correspondingly, the first network device receives the first HARQ feedback from the terminal device.

The first HARQ feedback is determined based on the decoding result of the first data. For example, if the terminal device successfully decodes the first data, the first HARQ feedback is an ACK; otherwise, if the terminal device fails to decode the first data, the first HARQ feedback is a NACK. After sending the first HARQ feedback, the terminal device starts drx-HARQ-RTT-TimerDL corresponding to the first HARQ feedback. After drx-HARQ-RTT-TimerDL expires, the terminal device starts, based on the decoding result of the first data, drx-RetransmissionTimerDL corresponding to the first HARQ feedback.

For example, in FIG. 16, the terminal device sends the first HARQ feedback to the first network device in an uplink slot U₁.

It should be understood that, for the terminal device, the terminal device receives control information a, and the control information a indicates resources of four PDSCHs and a k1 value, so that the terminal device determines, based on time domain positions of the PDSCHs and the k1 value, a slot in which the first HARQ feedback is located, for example, the uplink slot U₁ in FIG. 16. The control information may be one piece of control information a, or may be a plurality of pieces of control information, for example, four pieces of control information: control information a, b, c, and d.

(Optional) S1503: The terminal device sends the first data to the first network device. Correspondingly, the first network device receives the first data from the terminal device.

The first data is data transmitted through an SCH (for example, a physical uplink shared channel (physical uplink shared channel, PUSCH)). In this case, the first data is uplink data.

Optionally, the first data is transmitted through the PUSCH, and a HARQ process corresponding to the PUSCH may be denoted as a first HARQ.

Optionally, the first data may be transmitted in two manners: dynamic scheduling or semi-persistent scheduling.

Optionally, in a dynamic scheduling scenario, the first network device sends the control information a (for example, DCI) to indicate an uplink resource, for example, a PUSCH resource, and the terminal device sends, based on a time-frequency resource and a transmission parameter (for example, an MCS) that are indicated by the control information a, the first data to the first network device in a slot indicated by the control information a.

For the terminal device, after sending the first data (for example, a MAC PDU), the terminal device starts drx-HARQ-RTT-TimerUL. After drx-HARQ-RTT-TimerUL expires, the terminal device continues to start drx-RetransmissionTimerUL.

S1504: The terminal device determines a first time period.

Similarly, the first network device determines the first time period.

For the terminal device, that the first time period is used to monitor first control information may be understood as that the terminal device needs to continuously monitor a PDCCH in the first time period, to obtain the first control information in a timely manner for retransmission of the first data. For the first network device, the first time period is used to send the first control information. The first control information indicates to retransmit the first data.

For example, the first data is downlink data. As shown in FIG. 16, the first time period may be a time period corresponding to drx-RetransmissionTimerDL. drx-RetransmissionTimerDL is a timer corresponding to the first HARQ (or described as, drx-RetransmissionTimerDL is associated with the first HARQ). drx-RetransmissionTimerDL is configured by using DRX configuration information.

For example, the first data is uplink data. The first time period may be a time period corresponding to drx-RetransmissionTimerUL. drx-RetransmissionTimerUL is a timer corresponding to the first HARQ (or described as, drx-RetransmissionTimerUL is associated with the first HARQ). drx-RetransmissionTimerUL is configured by using the DRX configuration information.

In other words, the DRX configuration information is used to configure a retransmission timer (for example, drx-RetransmissionTimerUL or drx-RetransmissionTimerDL), for example, indicate running duration of the retransmission timer. For the terminal device, the terminal device may determine the first time period based on the retransmission timer. For example, a time period corresponding to the retransmission timer is the first time period. The retransmission timer is associated with the first HARQ. In this case, it may be understood that the first time period is associated with the first HARQ.

It should be noted that in this application, the first data is data received by the terminal device by using the SCH before a start moment of the first time period.

S1505: The first network device sends the first control information to the terminal device in the first overlapping time period when the first time period overlaps with the first measurement time period. Correspondingly, the terminal device monitors the first control information from the first network device in the first overlapping time period.

For example, the first network device determines the first overlapping time period, and sends the first control information to the terminal device in the first overlapping time period when the first time period overlaps with the first measurement time period. Correspondingly, the terminal device determines the first overlapping time period, and monitors the first control information from the first network device in the first overlapping time period.

For example, when the first time period overlaps with the first measurement time period, the terminal device does not measure a first reference signal in the first overlapping time period, but monitors the first control information from the first network device. In other words, in the first overlapping time period, not measuring the first reference signal and monitoring the first control information occur simultaneously.

For the first time period, refer to the descriptions of S1504. Details are not described again.

The first measurement time period is described as follows:
The first measurement time period is determined based on a first configuration. The first configuration is a configuration for sending the first reference signal by a first cell. For the first measurement time period, refer to the descriptions of S1003. Details are not described again.

The first overlapping time period is a time period in which the first time period overlaps with the first measurement time period. For details, refer to the descriptions in FIG. 13 or FIG. 16. Details are not described again.

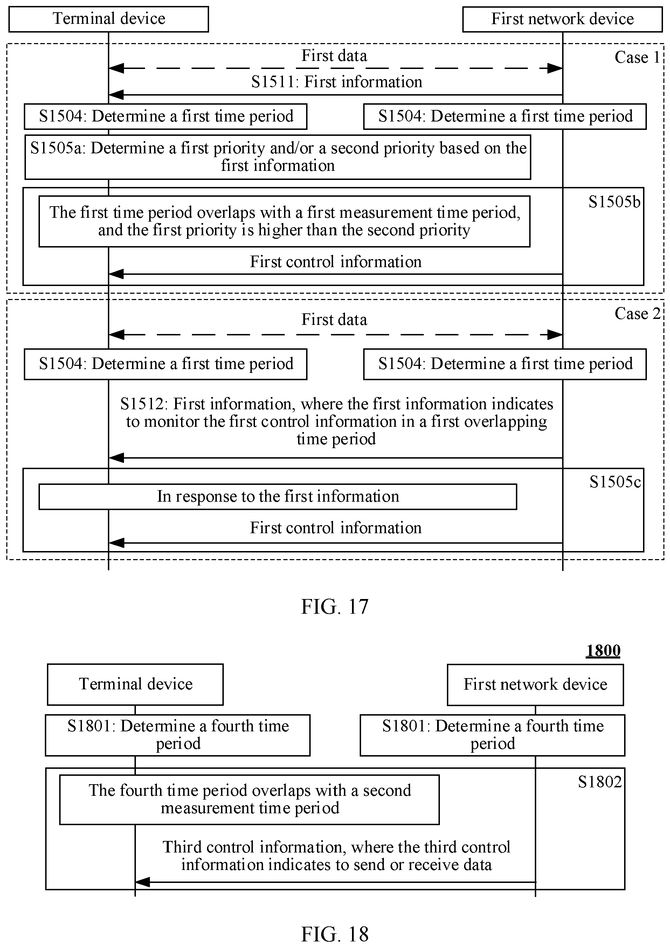

In some embodiments, as shown in "case 1" in FIG. 17, the terminal device further performs S1511:
S1511: The first network device sends the first information to the terminal device. Correspondingly, the terminal device receives the first information from the first network device.

The first information indicates a first priority and/or a second priority, the first priority is used to determine a priority of the first time period, and the second priority is a priority of the first configuration.

Manner 1: The first information is control information a, and the control information a indicates the first priority. Preferably, the control information a further schedules the first data. In an implementation, the first priority may be a priority of the first HARQ. It may alternatively be understood that the priority of the first time period is determined based on the priority of the first HARQ, for example, a priority of an operation time period of the retransmission timer (for example, drx-RetransmissionTimerUL or drx-RetransmissionTimerDL) corresponding to the first HARQ.

It may be understood that the priority of the first HARQ (namely, the first priority) is dynamically indicated. For details, refer to the descriptions of S1011. Details are not described again.

In this scenario, the control information a usually explicitly indicates a HARQ process corresponding to the SCH (for example, a PDSCH or a PUSCH), namely, the first HARQ, so that the priority of the first HARQ can be determined by using the control information a for scheduling the SCH. The SCH indicated by the control information a is used to transmit the first data.

Alternatively, the control information a indicates a priority of the SCH. The SCH corresponds to the first HARQ. Therefore, the priority of the SCH is the same as the priority of the first HARQ.

Optionally, the control information a may be further used to activate semi-persistent transmission shown in FIG. 9. For example, when the control information a is used to activate a CG type 2, the control information a may be used to indicate transmission resources of several subsequent CG PUSCHs. Therefore, the priority indicated by the control information a may be applicable to all semi-persistent transmission opportunities in the CG configuration, for example, priorities of all semi-persistently transmitted CG PUSCHs.

It should be noted that, in Manner 1, the terminal device may first perform S1511, and then perform S1501, or the terminal device may simultaneously perform S1501 and S1511. Alternatively, in Manner 1, the terminal device may first perform S1511, and then perform S1503, or the terminal device may simultaneously perform S1503 and S1511.

Manner 2: The first information is configuration information a, the configuration information a indicates a time-frequency resource of the SCH and a periodicity of the SCH, and the configuration information a further indicates the first priority. It may be understood that the priority of the first HARQ (namely, the first priority) is semi-statically indicated. For details, refer to the descriptions of S1011. Details are not described again.

Optionally, for example, the SCH is a CG PUSCH. The configuration information a indicates a priority of the CG configuration. The priority of the CG configuration is the same as the first priority. Alternatively, the first priority is the priority of the CG configuration. For example, if the priority of the CG configuration is high, then:
a priority of each transmission opportunity in the configuration is high; or a priority of a HARQ corresponding to each transmission opportunity in the configuration is high; or a priority of a retransmission timer (for example, drx-RetransmissionTimerUL) corresponding to the configuration is high.

The priority of each transmission opportunity in the configuration is the same as the priority of the HARQ corresponding to each transmission opportunity in the configuration. The priority of the retransmission timer corresponding to the configuration is the same as the priority of the HARQ corresponding to each transmission opportunity in the configuration.

Optionally, the configuration information a may be priority indication information added to an RRC message (for example, ConfiguredGrantConfig).

Manner 3: The first information is configuration information a, and the configuration information a further indicates the first priority. It may be understood that the priority of the first HARQ (namely, the first priority) is semi-statically indicated. Refer to the descriptions of S1011. Details are not described again. For example, the first network device (for example, a base station) configures a priority for each HARQ process by using higher layer signaling, for example, RRC signaling. For example, the HARQ priority may be shown as follows:

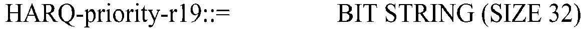

The higher layer signaling includes up to 32 bits, and each bit corresponds to one HARQ process. One-to-one mapping may be performed in an ascending order. For example, the first bit in the BIT STRING corresponds to a HARQ process ID 0, the second bit corresponds to a HARQ process ID 1, and so on. Alternatively, on the contrary, one-to-one mapping may be performed in a descending order. For example, the first bit in the BIT STRING corresponds to a HARQ process ID 31, the second bit corresponds to a HARQ process ID 30, and so on.

When a HARQ process is indicated as the first priority, all SCHs corresponding to the HARQ process may be considered as having the first priority. Alternatively, when a HARQ process is indicated as a first priority, the first time period (for example, a time period in which the retransmission timer runs) corresponding to the HARQ process may be considered as having the first priority.

It should be supplemented that, for Manner 1, Manner 2, and Manner 3, in some implementations, the first priority further indicates a priority of a DRX configuration. It may be understood that the first priority further affects the priority of the DRX configuration. For example, if the first priority is high, the priority of the DRX configuration is also high. Alternatively, if the first priority is low, the priority of the DRX configuration is also low. Alternatively, the DRX configuration may be replaced with a DRX timer. In other words, the first priority further indicates a priority of the DRX timer. It may be understood that the first priority further affects the priority of the DRX timer. For example, if the first priority is high, the priority of the DRX timer is also high. Alternatively, if the first priority is low, the priority of the DRX timer is also low.

It should be noted that, in Manner 2 or Manner 3, the terminal device may first perform S1511, and then perform S1501. Alternatively, the terminal device may first perform S1511, and then perform S1503.

Manner 4: The first information is DRX configuration information. The DRX configuration information is used to configure one or more of drx-onDurationTimer, drx-InactivityTimer, and drx-RetransmissionTimer. For the DRX configuration information, refer to a related 3GPP technical specification. Details are not described again. In addition, the DRX configuration information further indicates the first priority.

It is easy to understand that an XR service has a specific periodicity. Therefore, the terminal device may periodically monitor the PDCCH by using a DRX technology, so that low-latency transmission can be ensured, and transmit and receive power consumption of the terminal device can be reduced. For example, after a DRX periodicity, for example, a periodicity of drx-onDurationTimer, is matched with the periodicity of the XR service (60 Hz), the terminal device may monitor the PDCCH based on the service periodicity, to ensure low-latency transmission. Therefore, if a set of DRX is configured for some services (for example, the XR service), the set of DRX serves a low-latency service. Therefore, a DRX timer (for example, one or more of drx-onDurationTimer, drx-InactivityTimer, and drx-RetransmissionTimer) should have a high priority, or the DRX configuration has a high priority.

It should be noted that, in the communication method 1500 in this application, the first priority is the priority of the first HARQ or the first time period. Alternatively, this may be replaced by: the first priority is the priority of the DRX configuration, or the first priority is a priority of a DRX timer, for example, the priority of the retransmission timer, a priority of drx-onDurationTimer, or a priority of drx-InactivityTimer. Optionally, the first priority may be applicable to a timer, in the DRX configuration, that enables the terminal device to be in an active time, for example, one or more of drx-onDurationTimer, drx-InactivityTimer, and drx-RetransmissionTimer, and does not take effect on a timer that is not in the active time, for example, drx-HARQ-RTT-Timer.

Manner 5: The first information is configuration information X, the configuration information X indicates the first configuration, and the configuration information X further indicates the second priority. For details, refer to the descriptions of S1011. Details are not described again.

It should be noted that in a possible case, after the first threshold or the second priority is configured, the first priority may not be explicitly configured. In other words, the first priority may be determined based on the first threshold. Alternatively, in a case, the first threshold may be understood as the first priority.

Alternatively, in a case, after the first priority is configured, the second priority may not be explicitly configured. In other words, the first priority and the second priority may be logical concepts, and may not be separately indicated by using explicit physical signaling.

When the terminal device performs S1511, S1505 includes S1505a and S1505b.

S1505a: The terminal device determines the first priority and/or the second priority based on the first information.

For an implementation process of S1505a, refer to the descriptions of S1005a. Details are not described again.

S1505b: The first network device sends the first control information to the terminal device in the first overlapping time period when the first time period overlaps with the first measurement time period, and the first priority is higher than the second priority. Correspondingly, the terminal device monitors the first control information from the first network device in the first overlapping time period.

For an implementation process of S1505b, refer to the descriptions of S1005b. Details are not described again.

It should be noted that, in any one of the foregoing manners, a sequence of performing S1504 and S1505a by the terminal device may change. For example, the terminal device may first perform S1505a and then perform S1504, or may simultaneously perform S1504 and S1505a.

In other words, when the first priority is higher than the second priority, the terminal device monitors the first control information in the first overlapping time period, prioritizing transmission performance of service data.

In some embodiments, as shown in "case 2" in FIG. 17, the terminal device further performs S1512:
S1512: The first network device sends the first information to the terminal device. Correspondingly, the terminal device receives the first information from the first network device.

The first information indicates to monitor the first control information in the first overlapping time period. Alternatively, the first information indicates not to measure the first reference signal in the first overlapping time period.

When the terminal device performs S1512, S1505 includes S1505c:
S1505c: The terminal device monitors, in response to the first information, the first control information from the first network device in the first overlapping time period when the first time period overlaps with the first measurement time period.

In other words, it may be understood that the first network device indicates the terminal device to monitor the first control information in the first overlapping time period, helping ensure transmission performance of service data.

The foregoing describes the operation performed by the communication device (for example, the first network device or the terminal device) in the first overlapping time period by using an example in which the first time period is used to monitor the first control information.

It should be supplemented that, in a possible parallel manner, this application provides a communication method 1800. For a DRX configuration, the following cases may alternatively exist:

The following describes an operation performed by a communication device (for example, a first network device or a terminal device) in a second overlapping time period by using an example in which a fourth time period is used to monitor third control information.

The following describes in detail the communication method provided in an embodiment of this application with reference to FIG. 18. A communication method 1800 provided in this embodiment of this application includes the following operations.

S1801: The terminal device determines the fourth time period.

Similarly, the first network device determines the fourth time period.

The fourth time period is used to monitor the third control information, and the third control information indicates to send or receive data. It may be understood that the terminal device continuously monitors the third control information in the fourth time period.

Optionally, the fourth time period is determined based on a first timer.

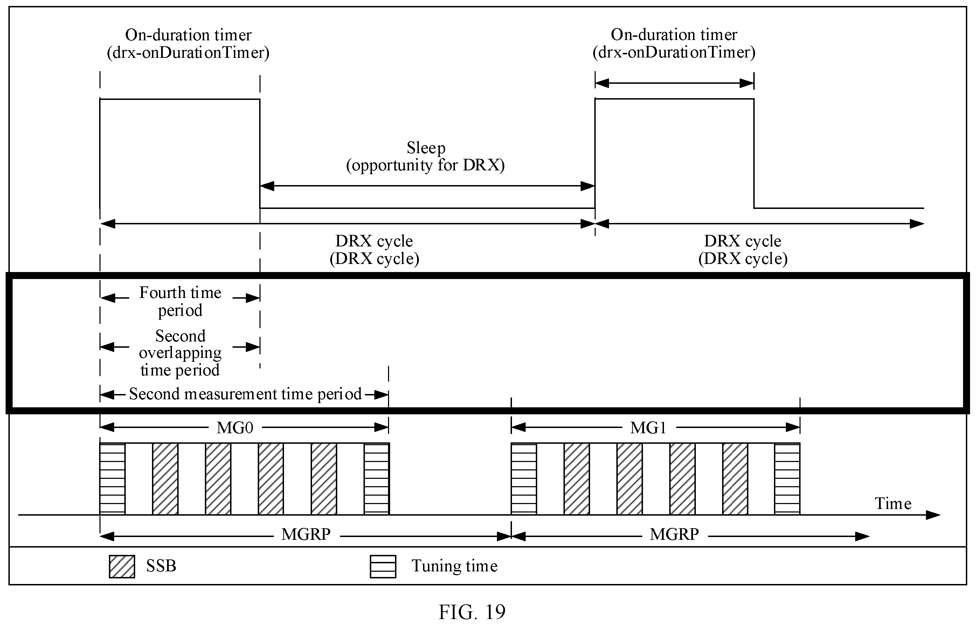

For example, the first timer includes drx-onDurationTimer, and the fourth time period is a time period corresponding to drx-onDurationTimer, as shown in FIG. 19. During running of drx-onDurationTimer, the terminal device needs to continuously monitor a PDCCH.

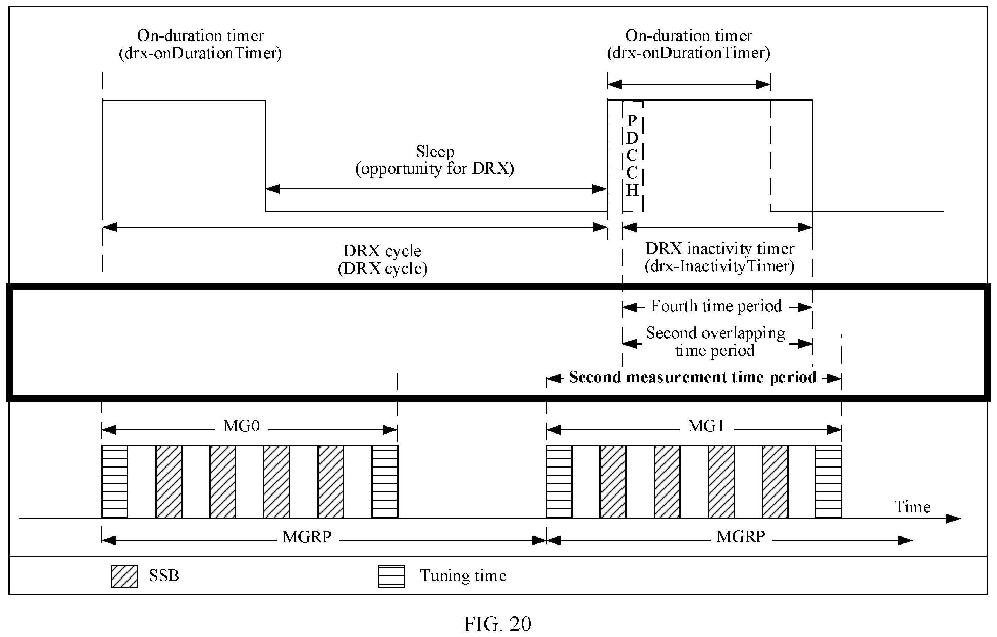

For another example, the first timer includes drx-InactivityTimer, and the fourth time period is a time period corresponding to drx-InactivityTimer, as shown in FIG. 20. During running of drx-InactivityTimer, the terminal device needs to continuously monitor the PDCCH.

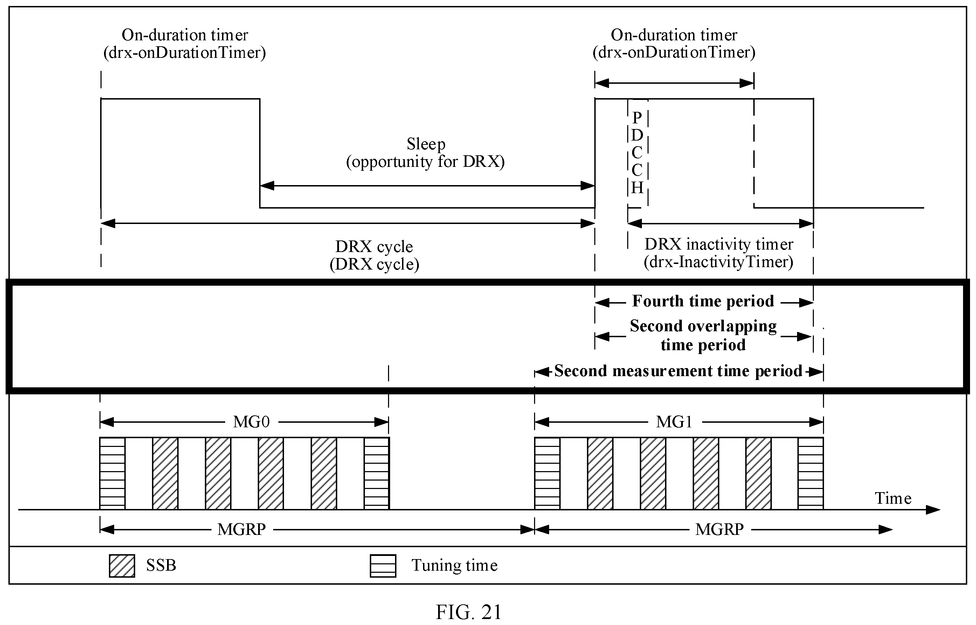

For still another example, the first timer includes drx-onDurationTimer and drx-InactivityTimer, and the fourth time period includes a time period corresponding to drx-onDurationTimer and a time period corresponding to drx-InactivityTimer, as shown in FIG. 21. During running of drx-onDurationTimer and drx-InactivityTimer, the terminal device needs to continuously monitor the PDCCH.

S1802: The first network device sends the third control information in the second overlapping time period when the fourth time period overlaps with the second measurement time period. Correspondingly, the terminal device monitors the third control information from the first network device in the second overlapping time period.

For example, the first network device determines the second overlapping time period, and sends the third control information in the second overlapping time period when the fourth time period overlaps with the second measurement time period. Correspondingly, the terminal device determines the second overlapping time period, and monitors the third control information from the first network device in the second overlapping time period.

For example, when the fourth time period overlaps with the second measurement time period, the terminal device does not measure a first reference signal in the second overlapping time period, and the terminal device monitors the third control information from the first network device in the second overlapping time period. In other words, in the second overlapping time period, not measuring the first reference signal and monitoring the third control information occur simultaneously.

The third control information indicates to send or receive data. For example, the third control information is DCI.

The second measurement time period is determined based on a first configuration. For the first configuration, refer to the descriptions of S1003. Details are not described again.

The second overlapping time period is a time period in which the fourth time period overlaps with the second measurement time period, as shown in FIG. 19, FIG. 20, or FIG. 21.

The second overlapping time period may be a part of the second measurement time period. For example, the second overlapping time period is located at a start part, a middle part, or an end part of the second measurement time period. This may be similar to the descriptions in FIG. 13.

In other words, compared with the descriptions in FIG. 10 to FIG. 17, for the fourth time period, refer to the descriptions of the first time period, for the second measurement time period, refer to the descriptions of the first measurement time period, and for the second overlapping time period, refer to the descriptions of the first overlapping time period.

In other words, when the fourth time period overlaps with the second measurement time period, the terminal device performs PDCCH monitoring instead of reference signal measurement in the second overlapping time period. Compared with a case in which the terminal device measures the first reference signal in the second overlapping time period and then monitors the third control information after the second overlapping time period, in this application, the terminal device can receive the third control information as early as possible. This reduces a service data transmission delay, and mitigates impact of reference signal measurement on data transmission to some extent.

Further, in some embodiments, the communication method 1800 in this application further includes: The first network device sends first information to the terminal device. Correspondingly, the terminal device receives the first information from the first network device. The first information indicates a first priority and/or a second priority, the first priority is used to determine a priority of the fourth time period, and the second priority is a priority of the first configuration. For details, refer to the descriptions of S1511. Details are not described again.

In this case, S1802 includes: The terminal device determines the first priority and/or the second priority based on the first information, and the first network device sends the third control information in the second overlapping time period when the fourth time period overlaps with the second measurement time period, and the first priority is higher than the second priority. Correspondingly, for the terminal device monitors the third control information from the first network device in the second overlapping time period, refer to the descriptions of S1505a and S1505b. Details are not described again.

In other words, when the first priority is higher than the second priority, the terminal device monitors the third control information in the second overlapping time period, prioritizing transmission performance of service data.

Further, in some embodiments, the communication method 1800 in this application further includes: The first network device sends first information to the terminal device. Correspondingly, the terminal device receives the first information from the first network device. The first information indicates to monitor the third control information in the second overlapping time period. Alternatively, the first information indicates not to measure the first reference signal in the second overlapping time period. For details, refer to the descriptions of S1512. Details are not described again.

In this case, S1802 includes: The terminal device monitors, in response to the first information, the third control information from the first network device in the second overlapping time period when the fourth time period overlaps with the second measurement time period. For details, refer to the descriptions of S1505c. Details are not described again.

In other words, it may be understood that the first network device indicates the terminal device to monitor the third control information in the second overlapping time period, helping ensure transmission performance of service data.

The foregoing describes the operation performed by the communication device (for example, the first network device or the terminal device) in the second overlapping time period.

The following describes a reference signal measurement process of a terminal device.

First, the following descriptions are provided. In a communication method 2200 and a communication method 2400 in this application, a first time period may be used to send first HARQ feedback. For details, refer to the descriptions of the communication method 1000. In this case, for a first measurement time period and a first overlapping time period, refer to the descriptions of the communication method 1000. The first time period may alternatively be used to monitor first control information. For details, refer to the descriptions of the communication method 1500. In this case, for the first measurement time period and the first overlapping time period, refer to the descriptions of the communication method 1500. The first time period may be further used to monitor third control information, that is, equivalent to the fourth time period in the communication method 1800. In this case, for the first measurement time period, refer to the descriptions of the second measurement time period in the communication method 1800, and for the first overlapping time period, refer to the descriptions of the second overlapping time period in the communication method 1800.

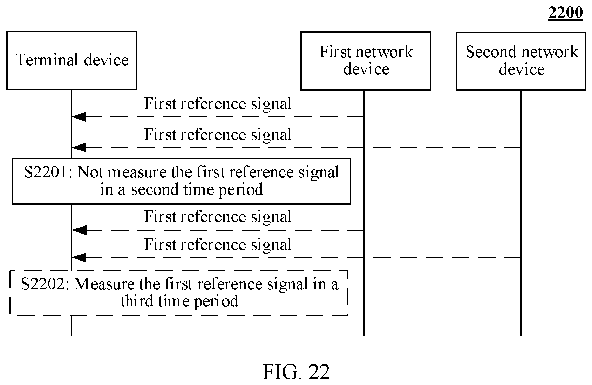

As shown in FIG. 22, the communication method 2200 according to an embodiment of this application further includes the following operations.

S2201: The terminal device does not measure a first reference signal in a second time period.

Optionally, in a possible alternative description, the terminal device cancels measuring the first reference signal in the second time period, or the terminal device does not activate measurement of the first reference signal in the second time period.

A measurement result of the first reference signal indicates signal quality of a first cell. For example, the first reference signal is an SSB, and the measurement result of the first reference signal may include one or more of the following: RSRP, an RSSI, RSRQ, an SINR, or the like. For details, refer to the descriptions in the term explanation part. Details are not described again.

It should be supplemented that, in this application, the first reference signal is a reference signal sent by the first cell. The first cell includes a serving cell or a candidate cell. For example, if the first cell is the serving cell, a network device corresponding to the serving cell is denoted as a first network device. If the first cell is the candidate cell, a network device corresponding to the candidate cell is denoted as a second network device. In this application, the serving cell is different from the candidate cell. The first network device and the second network device may be the same, or may be different. This is not limited in this application.

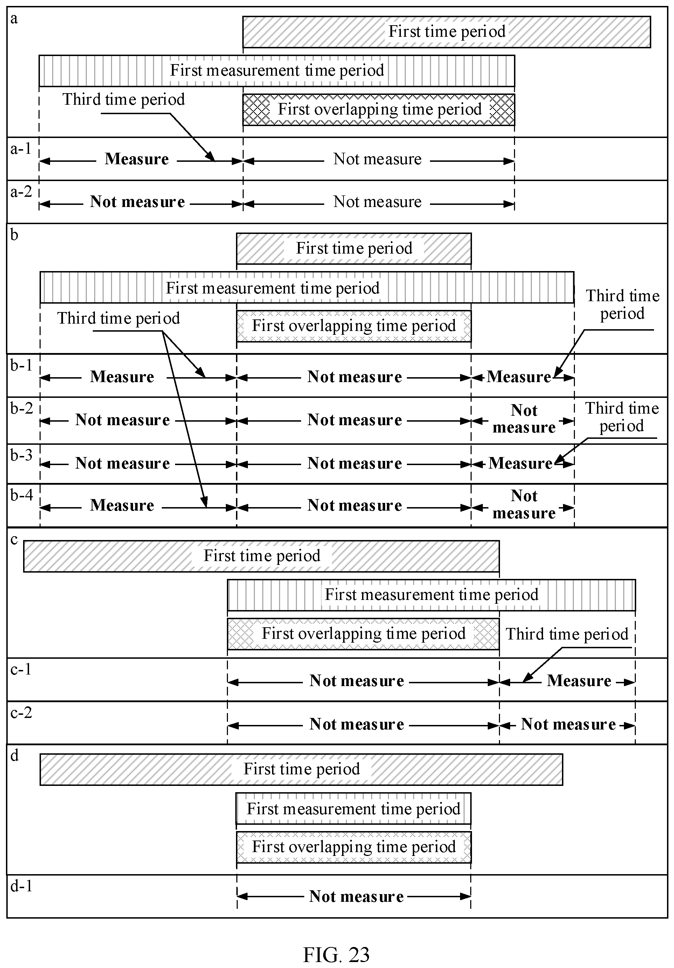

The second time period is described as follows:
Optionally, before the second time period is described, the following descriptions are provided with reference to FIG. 23.

As shown in a block labeled 'a' in FIG. 23, when a start moment of the first time period is later than a start moment of the first measurement time period, and an end moment of the first time period is later than or equal to an end moment of the first measurement time period, a start moment of the first overlapping time period is the start moment of the first time period, and an end moment of the first overlapping time period is the end moment of the first measurement time period.

As shown in a block labeled "a-1" in FIG. 23, the terminal device may measure the first reference signal in a time period between the start moment of the first measurement time period and the start moment of the first overlapping time period. The terminal device does not measure the first reference signal in the first overlapping time period.

As shown in a block labeled 'a-2' in FIG. 23, the terminal device may not measure the first reference signal in the time period between the start moment of the first measurement time period and the start moment of the first overlapping time period. The terminal device does not measure the first reference signal in the first overlapping time period. It may alternatively be understood that the terminal device does not measure the first reference signal in the first measurement time period.

As shown in a block labeled 'b' in FIG. 23, when a start moment of the first time period is later than a start moment of the first measurement time period, and an end moment of the first time period is earlier than an end moment of the first measurement time period, a start moment of the first overlapping time period is the start moment of the first time period, and an end moment of the first overlapping time period is the end moment of the first time period.

As shown in a block labeled "b-1" in FIG. 23, the terminal device may measure the first reference signal in a time period between the start moment of the first measurement time period and the start moment of the first overlapping time period. The terminal device does not measure the first reference signal in the first overlapping time period. In a time period between the end moment of the first time period and the end moment of the first measurement time period, the terminal device may measure the first reference signal.

As shown in a block labeled 'b-2' in FIG. 23, the terminal device may not measure the first reference signal in the time period between the start moment of the first measurement time period and the start moment of the first overlapping time period. The terminal device does not measure the first reference signal in the first overlapping time period. In the time period between the end moment of the first time period and the end moment of the first measurement time period, the terminal device may not measure the first reference signal. It may alternatively be understood that the terminal device does not measure the first reference signal in the first measurement time period.

As shown in a block labeled 'b-3' in FIG. 23, the terminal device may not measure the first reference signal in the time period between the start moment of the first measurement time period and the start moment of the first overlapping time period. The terminal device does not measure the first reference signal in the first overlapping time period. In a time period between the end moment of the first time period and the end moment of the first measurement time period, the terminal device may measure the first reference signal.

As shown in a block labeled "b-4" in FIG. 23, the terminal device may measure the first reference signal in a time period between the start moment of the first measurement time period and the start moment of the first overlapping time period. The terminal device does not measure the first reference signal in the first overlapping time period. In the time period between the end moment of the first time period and the end moment of the first measurement time period, the terminal device may not measure the first reference signal.

As shown in a block labeled 'c' in FIG. 23, when a start moment of the first time period is earlier than or equal to a start moment of the first measurement time period, and an end moment of the first time period is earlier than an end moment of the first measurement time period, a start moment of the first overlapping time period is the start moment of the first measurement time period, and an end moment of the first overlapping time period is the end moment of the first time period.

As shown in a block labeled 'c-1' in FIG. 23, the terminal device does not measure the first reference signal in the first overlapping time period. In a time period between the end moment of the first time period and the end moment of the first measurement time period, the terminal device may measure the first reference signal.

As shown in a block labeled 'c-2' in FIG. 23, the terminal device does not measure the first reference signal in the first overlapping time period. In the time period between the end moment of the first time period and the end moment of the first measurement time period, the terminal device may not measure the first reference signal. It may alternatively be understood that the terminal device does not measure the first reference signal in the first measurement time period.

As shown in a block labeled 'd' in FIG. 23, when a start moment of the first time period is earlier than or equal to a start moment of the first measurement time period, and an end moment of the first time period is later than or equal to an end moment of the first measurement time period, a start moment of the first overlapping time period is the start moment of the first measurement time period, and an end moment of the first overlapping time period is the end moment of the first measurement time period.

As shown in a block labeled 'd-1' in FIG. 23, the terminal device does not measure the first reference signal in the first overlapping time period. It may alternatively be understood that the terminal device does not measure the first reference signal in the first measurement time period.

The first overlapping time period is a time period in which the first time period overlaps with the first measurement time period. For the first time period and the first measurement time period, refer to the descriptions in FIG. 10 to FIG. 21. Details are not described again.

It can be learned from FIG. 23 that the second time period may include the following cases:
Optionally, the second time period is the first overlapping time period, as shown in FIG. 23.

Optionally, the second time period is the first measurement time period, as shown in blocks labeled 'a-2', 'b-2', 'c-2', and 'd-1' in FIG. 23.

Optionally, when the end moment of the first overlapping time period is equal to the end moment of the first measurement time period (as shown in blocks labeled 'a' and 'd' in FIG. 23), a start moment of the second time period is the start moment of the first overlapping time period, and/or an end moment of the second time period is the end moment of the first measurement time period (namely, the end moment of the first overlapping time period). In other words, the second time period is the first overlapping time period, that is, the terminal device does not measure the first reference signal in the first overlapping time period, as shown in blocks labeled 'a-1', 'a-2', and 'd-1' in FIG. 23.

Optionally, when an end moment of the first overlapping time period is earlier than an end moment of the first measurement time period, a start moment of the second time period is a start moment of the first measurement time period, and/or an end moment of the second time period is the end moment of the first overlapping time period.

For example, when the end moment of the first overlapping time period is earlier than the end moment of the first measurement time period, and the start moment of the second time period is the start moment of the first measurement time period, there may be the following two cases (case 1 and case 2):
Case 1: The end moment of the second time period may be the end moment of the first measurement time period. In other words, the second time period is the first measurement time period, as shown in the block labeled 'b-2' in FIG. 23.
Case 2: The end moment of the second time period may be the end moment of the first overlapping time period, as shown in the block labeled 'b-3' in FIG. 23.

For example, when the end moment of the first overlapping time period is earlier than the end moment of the first measurement time period, and the end moment of the second time period is the end moment of the first overlapping time period, there may be the following two cases (case 3 and case 4):
Case 3: The start moment of the second time period may be the start moment of the first overlapping time period. In other words, the second time period is the first overlapping time period, as shown in the blocks labeled 'b-1' and 'c-1' in FIG. 23.
Case 4: The start moment of the second time period may be the start moment of the first measurement time period, as shown in the block labeled 'b-3' in FIG. 23.

It should be supplemented that the terminal device does not measure the first reference signal in the second time period. It may be understood that the second time period (that is, all or a part of the first measurement time period) is not activated.

In a possible implementation, that the terminal device does not measure the first reference signal in the second time period may be understood as that a condition for measuring the first reference signal by the terminal device changes. For example, when a condition for starting (or activating) the first measurement time period described above is satisfied, a new condition may be further considered. In an example, for the new condition, refer to whether the first measurement time period overlaps with the first time period. For example, when the condition for starting the first measurement time period described above is satisfied, and the first measurement time period does not overlap with the first time period, the terminal device measures the first reference signal in the first measurement time period. Alternatively, on the contrary, it may be understood as that when the condition for starting the first measurement time period described above is satisfied, and the first measurement time period overlaps with the first time period, the terminal device does not measure the first reference signal in the second time period.

For example, the first measurement time period is an MG, and the first time unit (for example, a subframe) of each MG is a subframe that satisfies the following condition: $\begin{matrix}SFN mod T = FLOOR \left(gapOffset/10\right) ; \\ Subframe = gapOffset mod 10 ; \\ T = MGRP / 10 .\end{matrix}$ Formula (1)

In addition, if duration (for example, determined based on a parameter MGL) of the MG does not overlap with the first time period, the first measurement time period may be started (or activated). For example, the first measurement time period may further be related to another parameter, for example, mgta. The parameter is also used to determine duration of the first measurement time period, to further determine activation time and the duration of the MG.

It should be noted that, for a related parameter of Formula (1), refer to the descriptions of Formula (a). Details are not described again.

For another example, the first measurement time period is an SMTC, and the first time unit (for example, a subframe) of each SMTC is a subframe that satisfies the following condition: $\begin{matrix}SFN mod T = FLOOR \left(Offset/10\right) ; \\ If a length of Periodicity is greater than that of sf 5 : \\ subframe = Offset mod 10 ; \\ Otherwise : \\ subframe = Offset or \left(Offset+5\right) ; \\ with T = CEIL \left(Periodicity/10\right) .\end{matrix}$ Formula (2)

In addition, if duration (for example, determined based on a parameter duration) of the SMTC does not overlap with the first time period, the first measurement time period may be started (or activated). In other words, the terminal device measures the first reference signal in the first measurement time period. Alternatively, on the contrary, it may be understood as that if duration (for example, determined based on a parameter duration) of the SMTC overlaps with the first time period, the second time period may not be started (or activated). In other words, the terminal device does not measure the first reference signal in the second time period.

It should be noted that, for a related parameter of Formula (2), refer to the descriptions of Formula (b). Details are not described again.

For still another example, the first measurement time period is an RMTC, and the first time unit (for example, a subframe) of each RMTC is a subframe that satisfies the following condition: $\begin{matrix}SFN mod T = FLOOR \left(rmtc-SubframeOffset/10\right) ; \\ subframe = rmtc - SubframeOffset mod 10 ; \\ T = rmtc - Periodicity / 10 .\end{matrix}$ Formula (3)

In addition, if duration of the RMTC does not overlap with the first time period, for example, based on a quantity of consecutive symbols for RSSI sampling reported by a physical layer and a reference subcarrier spacing and a cyclic prefix used for RSSI measurement, the first measurement time period may be started (or activated). In other words, the terminal device measures the first reference signal in the first measurement time period. Alternatively, on the contrary, it may be understood as that if duration of the RMTC overlaps with the first time period, the second time period may not be started (or activated). In other words, the terminal device does not measure the first reference signal in the second time period.

That the duration of the first measurement time period does not overlap with the first time period may also be understood as that no time unit of the first measurement time period is in the first time period.

Further, for a case in which the first time period overlaps with the first measurement time period, S2201 includes: The terminal device does not measure the first reference signal in the second time period when the first time period overlaps with the first measurement time period, and a first priority is higher than a second priority.

The first priority is used to determine a priority of the first time period, and the second priority is a priority of a first configuration. For details, refer to the descriptions in FIG. 10 to FIG. 21. Details are not described again.

Further, for the case in which the first time period overlaps with the first measurement time period, S2201 includes: The terminal device does not measure, based on first information, the first reference signal in the second time period when the first time period overlaps with the first measurement time period.

The first information indicates not to measure the first reference signal in the second time period.

In this way, the terminal device determines, based on the first information, that the reference signal does not need to be measured in the second time period, so that an operation can be normally performed, for example, sending the first HARQ feedback, or monitoring the first control information or monitoring the third control information, to reduce a data transmission delay.

In some embodiments, the method further includes S2202:
S2202: The terminal device measures the first reference signal in a third time period.

The third time period is described in two implementations (the following Implementation 1 and Implementation 2):
Implementation 1: A start moment of the third time period is a first moment. The first moment is equal to the end moment of the first time period, as shown in FIG. 11, FIG. 12, FIG. 16, or FIG. 23. Alternatively, the first moment is later than the end moment of the first time period. Further, when the first moment is later than the end moment of the first time period, there is a specific time period between the first moment and the end moment of the first time period, for example, a sixth time period. The sixth time period is preconfigured, or the sixth time period is a time period configured by the network device (for example, the first network device).

Optionally, an end moment of the third time period is the end moment of the first measurement time period, as shown in FIG. 11, FIG. 12, FIG. 16, or FIG. 23.

In other words, in Implementation 1, the third time period may be understood as a part of the first measurement time period, for example, the third time period is located at an end part of the first measurement time period.

In this case, the first measurement time period may be obtained by using the foregoing descriptions, and the third time period may be further obtained by using the first measurement time period and the first time period. For example, the condition for performing measurement by the terminal device may further change to the following: After obtaining the start moment of the first measurement time period according to Formula (1), if the end moment of the first time period is in the first measurement time period (for example, this is determined based on a parameter such as duration or MGL), the terminal device starts to measure the first reference signal at the first moment. In this case, it may also be understood as that the third time period is a difference between the first measurement time period and the first overlapping time period, for example, the first measurement time period minus the first overlapping time period. In a case, the third time period may also be interpreted as a measurement timing configuration window, for example, an MG, an SMTC, or an RMTC, for performing measurement by the terminal device.

Alternatively, it may be understood as that, a time unit (for example, a subframe) corresponding to the first moment is determined based on the end moment of the first time period, and the end moment of the first time period is in the first measurement time period. For example, for activation time of the first measurement time period, refer to one or more of Formula (1) to Formula (3).

For example, the first measurement time period is an MG, and the first time unit (for example, a subframe) of each MG is a subframe that satisfies the following condition: $\begin{matrix}SFN mod T = FLOOR \left(gapOffset/10\right) ; \\ Subframe = gapOffset mod 10 ; \\ T = MGRP / 10 .\end{matrix}$ Formula (1)

In addition, when the duration (for example, determined based on the parameter MGL) of the MG does not overlap with the first time period, the third time period may be started (or activated). In this case, it may be understood as that the third time period is started when the first time period ends (or after the first time period ends), for example, at the first moment.

It should be noted that, for a related parameter of Formula (1), refer to the descriptions of Formula (a). Details are not described again.

For another example, the first measurement time period is an SMTC, and the first time unit (for example, a subframe) of each SMTC is a subframe that satisfies the following condition: $\begin{matrix}SFN mod T = FLOOR \left(Offset/10\right) ; \\ If a length of Periodicity is greater than that of sf 5 : \\ subframe = Offset mod 10 ; \\ Otherwise : \\ subframe = Offset or \left(Offset+5\right) ; \\ with T = CEIL \left(Periodicity/10\right) .\end{matrix}$ Formula (2)

In addition, when the duration (for example, determined based on the parameter duration) of the SMTC does not overlap with the first time period, the third time period may be started (or activated). In this case, it may be understood as that the third time period is started when the first time period ends (or after the first time period ends), for example, at the first moment.

It should be noted that, for a related parameter of Formula (2), refer to the descriptions of Formula (b). Details are not described again.

For still another example, the first measurement time period is an RMTC, and the first time unit (for example, a subframe) of each RMTC is a subframe that satisfies the following condition: $\begin{matrix}SFN mod T = FLOOR \left(rmtc-SubframeOffset/10\right) ; \\ subframe = rmtc - SubframeOffset mod 10 ; \\ T = rmtc - Periodicity / 10 .\end{matrix}$ Formula (3)

In addition, when the duration of the RMTC does not overlap with the first time period, for example, based on the quantity of consecutive symbols for RSSI sampling reported by the physical layer and the reference subcarrier spacing and the cyclic prefix used for RSSI measurement, the third time period may be started (or activated). In this case, it may be understood as that the third time period is started when the first time period ends (or after the first time period ends), for example, at the first moment.

That the duration of the first measurement time period does not overlap with the first time period may be understood as that a time period, in the first measurement time period, that does not overlap with the first time period is the third time period.

It should be noted that, for a related parameter of Formula (3), refer to the descriptions of Formula (c). Details are not described again.

Implementation 2: A start moment of the third time period is a first moment. The first moment is equal to the start moment of the first measurement time period, as shown in FIG. 23. An end moment of the third time period is the start moment of the first time period (as shown in the blocks labeled 'a-1', 'b-1', and 'b-4' in FIG. 23). Alternatively, an end moment of the third time period is the start moment of the first overlapping time period (as shown in the blocks labeled 'a-1', 'b-1', and 'b-4' in FIG. 23). Alternatively, an end moment of the third time period is earlier than the start moment of the first time period or the first overlapping time period.

Further, when the end moment of the third time period is earlier than the start moment of the first time period, there is a specific time period between the end moment of the third time period and the start moment of the first time period, for example, a seventh time period. The seventh time period is preconfigured, or the seventh time period is a time period configured by the network device (for example, the first network device).

Further, when the end moment of the third time period is earlier than the start moment of the first overlapping time period, there is a specific time period between the end moment of the third time period and the start moment of the first overlapping time period, for example, a seventh time period. The seventh time period is preconfigured, or the seventh time period is a time period configured by the network device (for example, the first network device).

In other words, the third time period may be understood as a part of the first measurement time period, for example, the third time period is located at a start part of the first measurement time period.

In this case, the first measurement time period may be obtained by using the foregoing descriptions, and the third time period may be further obtained by using the first measurement time period and the first time period. For example, the condition for performing measurement by the terminal device may further change to the following: After obtaining the start moment of the first measurement time period according to Formula (1), if the start moment of the first time period is in the first measurement time period (for example, this is determined based on a parameter such as duration or MGL), the terminal device starts to measure the first reference signal at the start moment of the first measurement time period, and stops measuring the first reference signal at the start moment of the first time period.

In a scenario, as shown in the block labeled 'a-1' in FIG. 23, the third time period is a difference between the first measurement time period and the first overlapping time period, for example, the first measurement time period minus the first overlapping time period. In a case, the third time period may also be interpreted as a measurement timing configuration window, for example, an MG, an SMTC, or an RMTC, for performing measurement by the terminal device.

Alternatively, it may be understood that a time unit (for example, a subframe) corresponding to the first moment is determined based on the start moment of the first measurement time period, and the end moment of the third time period is determined based on the start moment of the first time period. For example, for activation time of the first measurement time period, refer to one or more of Formula (1) to Formula (3).

For example, the first measurement time period is an MG, and the first time unit (for example, a subframe) of each MG is a subframe that satisfies the following condition: $\begin{matrix}SFN mod T = FLOOR \left(gapOffset/10\right) ; \\ Subframe = gapOffset mod 10 ; \\ T = MGRP / 10 .\end{matrix}$ Formula (1)

In other words, the first moment is determined according to Formula (1), that is, the third time period is started. The terminal device measures the first reference signal before the first overlapping time period (or before the first time period).

It should be noted that, for a related parameter of Formula (1), refer to the descriptions of Formula (a). Details are not described again.

For another example, the first measurement time period is an SMTC, and the first time unit (for example, a subframe) of each SMTC is a subframe that satisfies the following condition: $\begin{matrix}SFN mod T = FLOOR \left(Offset/10\right) ; \\ If a length of Periodicity is greater than that of sf 5 : \\ subframe = Offset mod 10 ; \\ Otherwise : \\ subframe = Offset or \left(Offset+5\right) ; \\ with T = CEIL \left(Periodicity/10\right) .\end{matrix}$ Formula (2)

In other words, the first moment is determined according to Formula (2), that is, the third time period is started. The terminal device measures the first reference signal before the first overlapping time period (or before the first time period).

It should be noted that, for a related parameter of Formula (2), refer to the descriptions of Formula (b). Details are not described again.

For still another example, the first measurement time period is an RMTC, and the first time unit (for example, a subframe) of each RMTC is a subframe that satisfies the following condition: $\begin{matrix}SFN mod T = FLOOR \left(rmtc-SubframeOffset/10\right) ; \\ subframe = rmtc - SubframeOffset mod 10 ; \\ T = rmtc - Periodicity / 10 .\end{matrix}$ Formula (3)

In other words, the first moment is determined according to Formula (3), that is, the third time period is started. The terminal device measures the first reference signal before the first overlapping time period (or before the first time period).

That the duration of the first measurement time period does not overlap with the first time period may be understood as that a time period, in the first measurement time period, that does not overlap with the first time period is the third time period.

It should be noted that, for a related parameter of Formula (3), refer to the descriptions of Formula (c). Details are not described again.

Optionally, for S2202, in a possible alternative description, the terminal device determines that the third time period is activated. Alternatively, the terminal device determines that a part of the first measurement time period is activated.

In this way, the terminal device may measure the first reference signal of the first cell in a timely manner in the third time period, helping improve reference signal measurement performance and resource utilization.

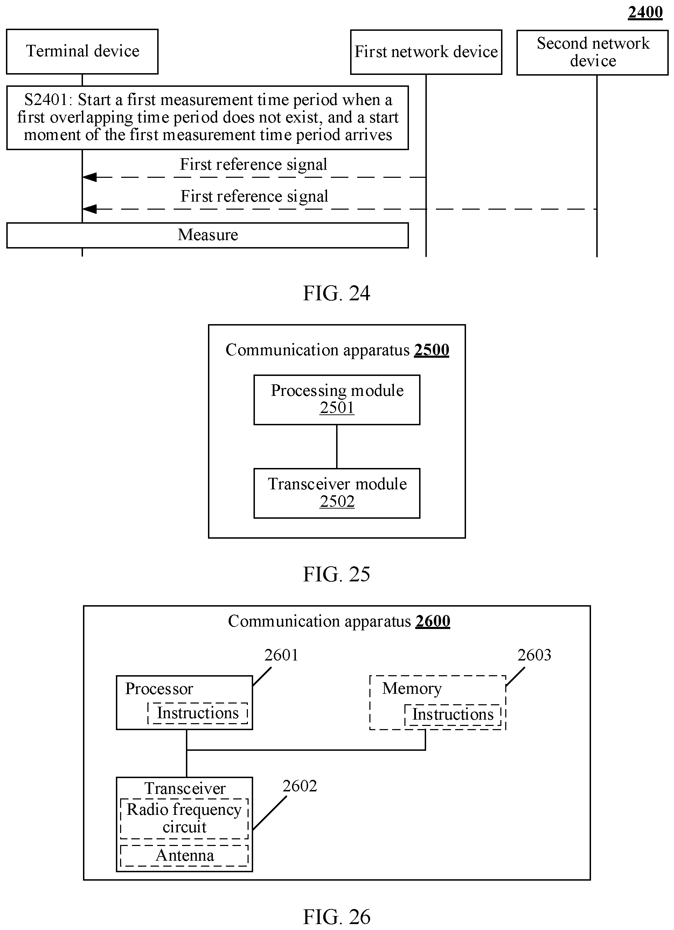

As shown in FIG. 24, the communication method 2400 according to an embodiment of this application further includes the following operations.

S2401: The terminal device starts the first measurement time period when the first overlapping time period does not exist, and the start moment of the first measurement time period arrives.

The first overlapping time period is a time period in which the first time period overlaps with the first measurement time period. For the first time period, the first measurement time period, and the first overlapping time period, refer to the descriptions in FIG. 10 to FIG. 21. Details are not described again.

That the first overlapping time period does not exist means that the first time period does not overlap with the first measurement time period.

The first measurement time period is determined based on the first configuration. For details, refer to the descriptions of S1003. Details are not described again.

Starting the first measurement time period may be understood as that the terminal device measures the first reference signal in the first measurement time period.

For example, for starting the first measurement time period by the terminal device, refer to the descriptions of "starting the first measurement time period" in S2201. Details are not described again.

In other words, the terminal device determines, based on whether the first overlapping time period exists, whether to start the first measurement time period, to determine whether to measure the first reference signal in the first measurement time period. When the first overlapping time period does not exist, the terminal device may start the first measurement time period in a timely manner to measure a reference signal of the first cell. In this way, accuracy of reference signal measurement is improved, and a service data transmission delay is not affected.

It should be understood that this embodiment of this application is applicable to a frequency range (frequency range, FR) 1, is applicable to an FR2, and is applicable to the entire terminal device.

It should be understood that in this application, the time period, namely, time duration, includes both a start moment of the time period and an end moment of the time period.

It may be understood that, in the foregoing embodiments, the method and/or the steps implemented by the network device may alternatively be implemented by a part (for example, a processor, a chip, a chip system, a circuit, a logical module, or software) that can be used in the network device, and the method and/or the steps implemented by the terminal device may alternatively be implemented by a part (for example, a processor, a chip, a chip system, a circuit, a logical module, or software) that can be used in the terminal device. The chip system may include a chip, or the chip system may include a chip and another discrete component.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. During actual implementation, another division manner may be used.

FIG. 25 is a diagram of a structure of a communication apparatus 2500. The communication apparatus 2500 includes a processing module 2501 and a transceiver module 2502. The communication apparatus 2500 may be configured to implement a function of the network device (for example, the first network device) or the terminal device.

In some embodiments, the communication apparatus 2500 further includes a storage module (not shown in FIG. 25), configured to store program instructions and data.

In some embodiments, the transceiver module 2502 may also be referred to as a transceiver unit, configured to implement a sending function and/or a receiving function. The transceiver module 2502 may include a transceiver circuit, a transceiver machine, a transceiver, or a communication interface.

In some embodiments, the transceiver module 2502 may include a receiving module and a sending module, respectively configured to perform receiving and sending steps performed by the network device (for example, the first network device) or the terminal device in the foregoing method embodiments and/or configured to support another process of the technology described in this specification. The processing module 2501 may be configured to perform processing (for example, determining) steps performed by the network device (for example, the first network device) or the terminal device in the foregoing method embodiments and/or configured to support another process of the technology described in this specification.

All related content of the steps in the foregoing method embodiments may be cited in function descriptions of the corresponding functional modules. Details are not described herein again.

Optionally, in this application, that the transceiver module receives/sends information may alternatively be understood as that the processing module receives/sends the information through the transceiver module. That the processing module receives/sends the information through the transceiver module may alternatively be understood as that the processing module controls the transceiver module to receive/send the information. Alternatively, that the processing module sends the information through the transceiver module may be understood as that the processing module outputs the information to the transceiver module, and the transceiver module sends the information; and that the processing module receives the information through the transceiver module may be understood as that the transceiver module receives the information and inputs the information to the processing module.

In this application, the communication apparatus 2500 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that may provide the foregoing functions.

In some embodiments, when the communication apparatus 2500 in FIG. 25 is a chip or a chip system, a function/an implementation process of the transceiver module 2502 may be implemented by an input/output interface (or a communication interface) of the chip or the chip system, and a function/an implementation process of the processing module 2501 may be implemented by a processor (or a processing circuit) of the chip or the chip system.

The communication apparatus 2500 provided in this embodiment can perform the foregoing methods. Therefore, for technical effects that can be achieved by the communication apparatus 2500, refer to the foregoing method embodiments. Details are not described herein again.

In a possible product form, the network device (for example, the first network device) or the terminal device in embodiments of this application may alternatively be implemented by using the following: one or more field programmable gate arrays (field programmable gate arrays, FPGAs), a programmable logic device (programmable logic device, PLD), a controller, a state machine, a logic gate, a discrete hardware component, any other suitable circuit, or any combination of circuits that can perform various functions described throughout this application.

In another possible product form, the network device (for example, the first network device) or the terminal device described in embodiments of this application may be implemented by using a general bus architecture. For ease of description, FIG. 26 is a diagram of a structure of a communication apparatus 2600 according to an embodiment of this application. The communication apparatus 2600 includes a processor 2601 and a transceiver 2602. The communication apparatus 2600 may be a network device (for example, a first network device), or a chip or a chip system in the network device. Alternatively, the communication apparatus 2600 may be a terminal device, or a chip or a module in the terminal device. FIG. 26 shows only main components of the communication apparatus 2600. In addition to the processor 2601 and the transceiver 2602, the communication apparatus 2600 may further include a memory 2603 and an input/output apparatus (not shown in the figure).

Optionally, the processor 2601 is mainly configured to: process a communication protocol and communication data, control the entire communication apparatus, execute a software program, and process data of the software program. The memory 2603 is mainly configured to store the software program and data. The transceiver 2602 may include a radio frequency circuit and an antenna. The radio frequency circuit is mainly configured to: perform conversion between a baseband signal and a radio frequency signal and process the radio frequency signal. The antenna is mainly configured to receive and send a radio frequency signal in a form of electromagnetic wave. The input/output apparatus, for example, a touchscreen, a display, or a keyboard, is mainly configured to: receive data input by a user and output data to the user.

Optionally, the processor 2601, the transceiver 2602, and the memory 2603 may be connected through a communication bus.

It should be noted that the memory 2603 may be independent of the processor 2601, or may be integrated with the processor 2601. The memory 2603 may be located inside the communication apparatus 2600, or may be located outside the communication apparatus 2600. This is not limited.

After the communication apparatus is powered on, the processor 2601 may read the software program in the memory 2603, interpret and execute instructions of the software program, and process the data of the software program. When data needs to be sent wirelessly, the processor 2601 performs baseband processing on the to-be-sent data, and then outputs a baseband signal to a radio frequency circuit. The radio frequency circuit performs radio frequency processing on the baseband signal, and then sends a radio frequency signal through the antenna in a form of electromagnetic wave. When data is sent to the communication apparatus, the radio frequency circuit receives a radio frequency signal through the antenna, converts the radio frequency signal into a baseband signal, and outputs the baseband signal to the processor 2601. The processor 2601 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 2500 may be in a form of the communication apparatus 2600 shown in FIG. 26.

In an example, functions/implementation processes of the processing module 2501 in FIG. 25 may be implemented by the processor 2601 in the communication apparatus 2600 shown in FIG. 26 by invoking the computer-executable instructions stored in the memory 2603. Functions/implementation processes of the transceiver module 2502 in FIG. 25 may be implemented by the transceiver 2602 in the communication apparatus 2600 shown in FIG. 26.

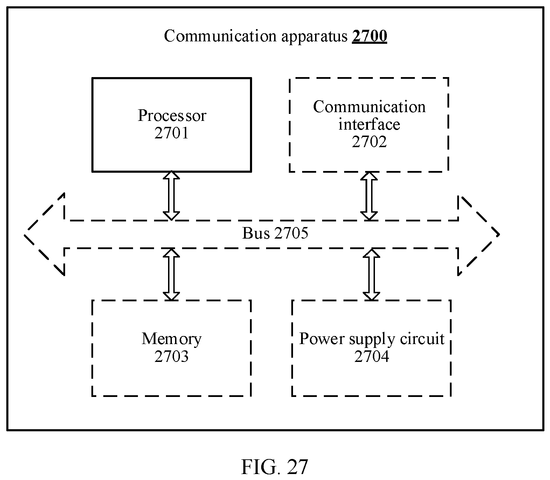

In still another possible product form, the network device (for example, the first network device) or the terminal device in this application may be of a composition structure shown in FIG. 27, or include components shown in FIG. 27. FIG. 27 is a diagram of composition of a communication apparatus 2700 according to this application.

As shown in FIG. 27, the communication apparatus 2700 includes at least one processor 2701. Optionally, the communication apparatus further includes a communication interface 2702.

When related program instructions are executed in the at least one processor 2701, the apparatus 2700 may be caused to implement the method provided in any one of the foregoing embodiments and any possible design thereof. Alternatively, the processor 2701 is configured to implement the method provided in any one of the foregoing embodiments and any possible design thereof by using a logic circuit or by executing code instructions.

The communication interface 2702 may be configured to receive program instructions and transmit the program instructions to the processor. Alternatively, the communication interface 2702 may be configured to perform communication interaction between the communication apparatus 2700 and another communication device, for example, exchange control signaling and/or service data. For example, the communication interface 2702 may be configured to receive a signal from an apparatus other than the communication apparatus 2700 and transmit the signal to the processor 2701, or send a signal from the processor 2701 to a communication apparatus other than the communication apparatus 2700.

Optionally, the communication interface 2702 may be code and/or data read/write interface circuit, or the communication interface 2702 may be a signal transmission interface circuit between a communication processor and a transceiver, or may be a pin of a chip.

Optionally, the communication apparatus 2700 may further include at least one memory 2703, and the memory 2703 may be configured to store required related program instructions and/or data.

It should be noted that the memory 2703 may be independent of the processor 2701, or may be integrated with the processor 2701. The memory 2703 may be located inside the communication apparatus 2700, or may be located outside the communication apparatus 2700. This is not limited.

Optionally, the communication apparatus 2700 may further include a power supply circuit 2704, and the power supply circuit 2704 may be configured to supply power to the processor 2701. The power supply circuit 2704 may be located in a same chip as the processor 2701, or may be located in a chip other than a chip in which the processor 2701 is located.

Optionally, the communication apparatus 2700 further includes a bus 2705, and parts of the communication apparatus 2700 may be interconnected through the bus 2705.

In some embodiments, in terms of hardware implementation, a person skilled in the art may figure out that the communication apparatus 2500 shown in FIG. 25 may be in a form of the communication apparatus 2700 shown in FIG. 27.

In an example, functions/implementation processes of the processing module 2501 in FIG. 25 may be implemented by the processor 2701 in the communication apparatus 2700 shown in FIG. 27 by invoking the computer-executable instructions stored in the memory 2703. Functions/implementation processes of the transceiver module 2502 in FIG. 25 may be implemented by the communication interface 2702 in the communication apparatus 2700 shown in FIG. 27.

It should be noted that the structure shown in FIG. 27 does not constitute a specific limitation on the network device (for example, the first network device) or the terminal device. For example, in some other embodiments of this application, the network device (for example, the first network device) or the terminal device may include more or fewer components than those shown in the figure, combine some components, or split some components, or have different component arrangements. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in this embodiment of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include the memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component) and send the computer-executable instructions to the processor.

In still another possible implementation, the communication apparatus further includes a communication interface. The communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions of any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the systems, apparatuses, and methods described in this application may alternatively be implemented in another manner. For example, the described apparatus embodiments are merely examples. For example, the unit division is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A communication method, comprising:
determining a first overlapping time period when a first time period overlaps with a first measurement time period, and sending first hybrid automatic repeat request HARQ feedback or monitoring first control information in the first overlapping time period, wherein the first overlapping time period is a time period in which the first time period overlaps with the first measurement time period;
the first time period is used to transmit the first HARQ feedback, and the first HARQ feedback is determined based on a decoding result of first data; or the first time period is used to monitor the first control information, and the first control information indicates to retransmit first data;
the first measurement time period is determined based on a first configuration, the first configuration is a configuration for sending a first reference signal by a first cell, and a measurement result of the first reference signal indicates signal quality of the first cell; and
the first data is data sent or received by using a shared channel SCH before a start moment of the first time period.

2. The method according to claim 1, wherein the method further comprises:
skipping measuring the first reference signal in a second time period, wherein
the second time period is the first measurement time period or the first overlapping time period.

3. The method according to claim 1, wherein the method further comprises:
skipping measuring the first reference signal in a second time period, wherein
when an end moment of the first overlapping time period is earlier than an end moment of the first measurement time period, a start moment of the second time period is a start moment of the first measurement time period, and/or an end moment of the second time period is the end moment of the first overlapping time period; or
when an end moment of the first overlapping time period is equal to an end moment of the first measurement time period, a start moment of the second time period is a start moment of the first overlapping time period, and/or an end moment of the second time period is the end moment of the first measurement time period.

4. The method according to any one of claims 1 to 3, wherein the method further comprises:
measuring the first reference signal in a third time period, wherein a start moment of the third time period is a first moment;
the first moment is equal to or later than an end moment of the first time period, and an end moment of the third time period is the same as the end moment of the first measurement time period; or
the first moment is the same as the start moment of the first measurement time period, and an end moment of the third time period is the same as the start moment of the first time period.

5. The method according to any one of claims 1 to 4, wherein the method further comprises:
receiving first information, wherein
sending the first HARQ feedback in the first overlapping time period comprises:
sending the first HARQ feedback in the first overlapping time period based on the first information; and
monitoring the first control information in the first overlapping time period comprises:
monitoring the first control information in the first overlapping time period based on the first information.

6. The method according to claim 5, wherein the first time period is associated with a first HARQ when the first time period is used to monitor the first control information; and
monitoring the first control information in the first overlapping time period based on the first information comprises:
determining a first priority and/or a second priority based on the first information, wherein the first priority indicates a priority of the first HARQ, and the second priority indicates a priority of the first configuration; and
monitoring the first control information in the first overlapping time period when the first priority is higher than the second priority.

7. The method according to claim 5, wherein
sending the first HARQ feedback in the first overlapping time period based on the first information comprises:
determining a first priority and/or a second priority based on the first information, wherein the first priority is a priority of the first HARQ, and the second priority is a priority of the first configuration; and
sending the first HARQ feedback in the first overlapping time period when the first priority is higher than the second priority.

8. The method according to claim 6 or 7, wherein
the first information is second control information, the second control information is used to schedule the first data, and the second control information further indicates the first priority.

9. The method according to claim 6 or 7, wherein the first information indicates the first priority.

10. The method according to claim 9, wherein the first information further indicates the SCH and a periodicity of the SCH.

11. The method according to any one of claims 6 to 10, wherein the first priority further indicates a priority of a discontinuous reception DRX configuration.

12. The method according to claim 6 or 7, wherein the first information indicates the second priority.

13. The method according to claim 12, wherein the second priority is lower than or equal to a first threshold.

14. The method according to claim 6, wherein the first information is discontinuous reception DRX configuration information, the DRX configuration information is used to configure a retransmission timer RetransmissionTimer, and the method further comprises:
determining the first time period based on the retransmission timer, wherein the retransmission timer is associated with the first HARQ.

15. The method according to claim 14, wherein the DRX configuration information is further used to configure a first timer, and the method further comprises:
determining a fourth time period based on the first timer; and
determining a second overlapping time period when the fourth time period overlaps with a second measurement time period, and monitoring third control information in the second overlapping time period, wherein the third control information indicates to send or receive data; and
the second measurement time period is determined based on the first configuration, and the second overlapping time period is a time period in which the fourth time period overlaps with the second measurement time period.

16. The method according to claim 15, wherein the first timer comprises an on-duration timer onDurationTimer or an inactivity timer InactivityTimer.

17. A communication method, comprising:
determining a first overlapping time period when a first time period overlaps with a first measurement time period, and receiving first hybrid automatic repeat request HARQ feedback or sending first control information in the first overlapping time period, wherein the first overlapping time period is a time period in which the first time period overlaps with the first measurement time period;
the first time period is used to receive the first HARQ feedback, and the first HARQ feedback is determined based on a decoding result of first data; or the first time period is used to send the first control information, and the first control information indicates to retransmit first data;
the first measurement time period is determined based on a first configuration, the first configuration is a configuration for sending a first reference signal by a first cell, and a measurement result of the first reference signal indicates signal quality of the first cell; and
the first data is data sent or received by using a shared channel SCH before a start moment of the first time period.

18. The method according to claim 17, wherein
the first time period is associated with a first HARQ when the first time period is used to send the first control information; and
sending the first control information in the first overlapping time period comprises:
when a first priority is higher than a second priority, sending the first control information in the first overlapping time period, wherein the first priority indicates a priority of the first HARQ, and the second priority indicates a priority of the first configuration.

19. The method according to claim 17, wherein
sending the first HARQ feedback in the first overlapping time period comprises:
when a first priority is higher than a second priority, sending the first HARQ feedback in the first overlapping time period, wherein the first priority is a priority of the first HARQ, and the second priority is a priority of the first configuration.

20. The method according to claim 18 or 19, wherein the method further comprises: sending first information, wherein the first information is used to determine the first priority and/or the second priority.

21. A communication apparatus, wherein the communication apparatus is configured to implement the method according to any one of claims 1 to 16.

22. The communication apparatus according to claim 21, wherein the communication apparatus comprises a terminal device or a chip.

23. A communication apparatus, wherein the communication apparatus is configured to implement the method according to any one of claims 17 to 20.

24. The communication apparatus according to claim 23, wherein the communication apparatus comprises a network device or a chip.

25. A computer-readable storage medium, storing a computer program or instructions, wherein when the computer program or the instructions are executed, the method according to any one of claims 1 to 16 is implemented, or the method according to any one of claims 17 to 20 is implemented.

26. A computer program product, wherein when the computer program product is run, the method according to any one of claims 1 to 16 is implemented, or the method according to any one of claims 17 to 20 is implemented.
